(19) Europäisches Patentamt

European Patent Office

Office européen des brevets

(11) **EP 0 569 922 B1**

(12) **EUROPEAN PATENT SPECIFICATION**

(45) Date of publication and mention
of the grant of the patent:
**09.08.2000 Bulletin 2000/32**

(51) Int. Cl.[7]: **G02F 1/1335**, H04N 9/31

(21) Application number: **93107619.4**

(22) Date of filing: **11.05.1993**

(54) **Liquid crystal panel and liquid crystal projection TV receiver set**

Flüssigkristalltafel und Flüssigkristall-Projektions-Fernsehempfänger

Panneau à cristal liquide et récepteur de télévision à projection à cristal liquide

(84) Designated Contracting States:
**DE FR GB NL**

(30) Priority: **15.05.1992 JP 12310792
15.05.1992 JP 12310892
18.09.1992 JP 24906892
18.09.1992 JP 24906992
18.09.1992 JP 24907092**

(43) Date of publication of application:
**18.11.1993 Bulletin 1993/46**

(73) Proprietor:
**MATSUSHITA ELECTRIC INDUSTRIAL CO., LTD.
Kadoma-shi, Osaka-fu, 571 (JP)**

(72) Inventors:
• **Sannohe, Sinya
Osaka-fu 572 (JP)**
• **Takahara, Hiroshi
Neyagawa-shi, Osaka 572 (JP)**
• **Omae, Hideki
Suita-shi, Osaka-fu 564 (JP)**

(74) Representative:
**Eisenführ, Speiser & Partner
Martinistrasse 24
28195 Bremen (DE)**

(56) References cited:
**EP-A- 0 205 261          DE-A- 2 852 395
DE-A- 3 137 518**

• **PATENT ABSTRACTS OF JAPAN vol. 9, no. 68
(P-344)(1791) 28 March 1985 & JP-A-59 202 435 (
NIPPON JIDOSHA ) 16 November 1984**
• **SID INTERNATIONAL SYMPOSIUM, DIGEST OF
TECHNICAL PAPERS 1986, NEW YORK, US
pages 375 - 378 S.MOROZUMI ET AL. 'LCD Full-
Color Video Projector'**

**Description**

The present invention relates to a liquid crystal panel as well as to a projection-type display device comprising at least one of such liquid crystal panels, preferably for projection television receiver sets in which an image is displayed by a compact liquid crystal panel and is projected in enlarged scale onto a screen.

Due to its numerous features including light-weight and compact features, the liquid crystal panel is currently intensively studied. However, the liquid crystal panel has some problems including its incapability of providing a relatively large display surface. Therefore, in recent years, a liquid crystal projection TV receiver set capable of providing an enlarged image display attracts public attentions. In commercially available liquid crystal projection TV receiver sets, a twisted nematic (hereinafter referred to as TN) liquid crystal panel utilizing the optical rotatory power of liquid crystal is employed. An example of the liquid crystal projection TV receiver set and that of the liquid crystal panel used therein are disclosed by Morimizu et al. in "SID 86 DIGEST", pages 375 to 378.

Hereinafter, the prior art liquid crystal panel will be discussed. However, it is to be noted that unnecessary portions which do not require explanation are omitted and, for the purpose of clarity of the drawing, the liquid crystal panel is schematically shown. This description is equally applicable to the other accompanying drawings.

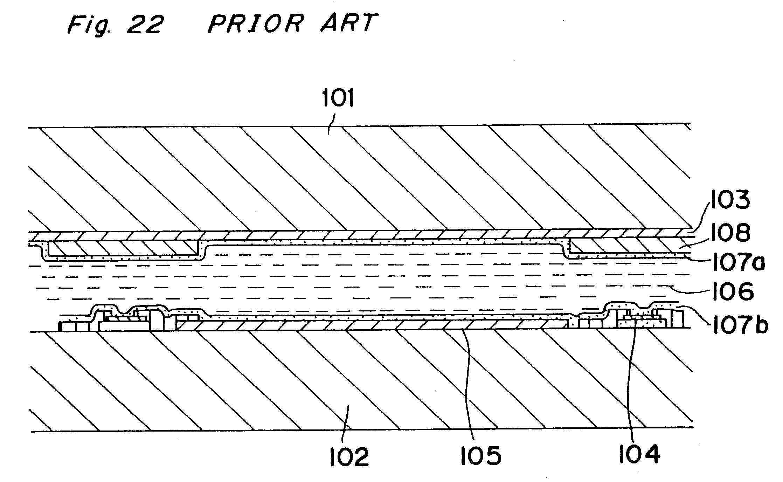

Fig. 22 illustrates a sectional view of the prior art liquid crystal panel. A counterelectrode substrate 101 and an array substrate 102 are retained spaced from each other a distance of 4 to 6 μm, with TN liquid crystal 106 filled therebetween. A peripheral portion of a display region is sealed by a sealing resin (not shown). The counterelectrode substrate 101 is formed with counterelectrodes 103, made of transparent electroconductive material such as ITO or the like, a black matrix made of chromium or the like and orientation films 107a, while the array substrate 102 is formed with thin-film transistors 104, pixel electrodes 105 and orientation films 107b.

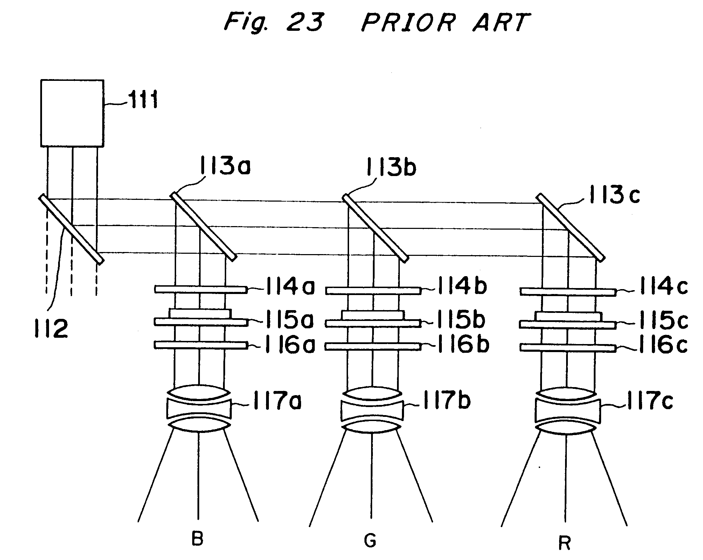

Fig. 23 illustrates a structure of the prior art liquid crystal projection TV receiver set. White rays of light emitted from a light source 111 are, after having a UV-IR cutoff mirror 112 operable to cut off infrared and ultraviolet regions of light, separated by dichroic mirrors 113a, 113b and 113c into light of three primary colors, i.e., blue (B), green (G) and red (R) rays of light. The B, G and R rays of light subsequently enter respective polarizing plates 114a, 114b and 114c. Each of the polarizing plates 114a, 114b and 114c allows the passage of one of vertically and horizontally vibrating components of the respective rays of light therethrough. Thereafter, the B, G and R rays of light emerging outwardly from the respective polarizing plates 114a, 114b and 114c in the form of a linearly polarized beam impinge upon respective liquid crystal panels 115a, 115b and 115c. It is to be noted that, during the passage of each of the B, G and R rays of light across the associated polarizing plate 114a, 114b and 114c, 50% or more of the light is absorbed by the associated polarizing plate 114a, 114b and 114c and, therefore, the amount of light emerging outwardly from the respective polarizing plate 114a, 114b or 114c is of a value equal to or smaller than 50% of the incoming light incident upon such polarizing plate. Each of the liquid crystal panel 115a, 115b and 115c is operable to modulate the incident light in response to a video signal applied thereto. The modulated light subsequently passes, depending on the degree of modulation, through polarizing plates 116a, 116b and 116c and are then projected on an enlarged scale onto a screen (not shown) through projection lenses 117a, 117b and 117c.

As the foregoing description makes it clear, the liquid crystal panel utilizing the TN liquid crystal requires the use of a polarizing plate to linearly polarize the incoming light. Another polarizing plate is also required on an exit side of the liquid crystal panel for detecting the light modulated by the liquid crystal panel. In other words, two polarizing plates have to be disposed frontwardly and rearwardly of the liquid crystal panel, respectively; one for linearly polarizing the incoming light, which is referred to as a polarizer, and the other for detecting the modulated light, which is referred to as an analyzer. Assuming that the pixel aperture of the liquid crystal panel is 100% and the amount of light incident on the polarizer is 1, the amount of light emerging outwardly from the polarizer is 40%, the light transmissivity of the liquid crystal panel is 80% and the light transmissivity of the analyzer is 80% and, therefore, only about 25% of the light is effectively utilized. Accordingly, the TN liquid crystal panel merely has a capability of displaying an image at a low luminosity.

Most of light lost at the polarizer and others are absorbed by the polarizer for conversion into heat. The heat then heats the polarizer itself and also the liquid crystal panel by radiation. In the case of the liquid crystal projection TV receiver set, the amount of light incident on the polarizer amounts to a value equal or greater than several ten thousand of luxes. Accordingly, where the TN liquid crystal panel is employed in the liquid crystal TV receiver set, the polarizer, the liquid crystal panel and others are heated to such an extent as to cause their performance to be reduced in a short period of time.

The prior art TN liquid crystal panel requires an application of the orientation film and a rubbing process. The rubbing process tends to result in an increase in number of manufacturing steps which in turn result in an increase of the manufacturing cost. Also, in recent years, the number of pixels used in the liquid crystal panel for use in the liquid crystal projection TV receiver set has increased to a considerable capacity, i.e., 300 thousand or more of pixels, accompanying in reduction in size of each pixel. Miniaturization of the pixels requires formation of an increased number of surface indentations for accommodating signal lines and thin-film transistors, and the presence of the increased surface indentations has naturally made it difficult to accomplish a satisfactory rubbing. Also, miniaturization of the pixels results in an increase of an surface area where thin-film transistors and associated signal lines for each pixel are formed and, hence, in a reduction in pixel aperture. By way of example, in the case where 350 thousand of pixels are formed in a liquid crystal panel of 3 inches in diagonal dimension, the pixel aperture is about 30%, and in the case of the liquid crystal panel having 1.5 million of pixels, the pixel aperture is suspected to be possibly of a value less than, but close to 10%. The reduction in pixel aperture does not only gives rise to a reduction in luminosity of the image displayed by the liquid crystal panel, but also accelerate a reduction in performance, as discussed above, due to the heating of the liquid crystal panel which takes place when portions other than the aperture for receiving the incoming light is radiated.

Moreover, the TN liquid crystal panel has a phenomenon in which light leaks in the vicinity of the signal lines. While this phenomenon occurs when the liquid crystal panel is used in a normally white mode, a similar phenomenon occurs in a black display in which a generally moon-like shape of light leaks. This light leakage results in a reduction in contrast and quality of the image displayed. To avoid the light leakage requires an increase in width of each line of a black matrix which in turn results in a reduction of the pixel aperture, thereby posing a problem associated with the heating of the liquid crystal panel as discussed above.

As hereinbefore described, since the display accomplished in the prior art TN liquid crystal panel is of a low luminosity and since the efficiency of utilization of the total available light is low, the liquid crystal panel and others tend to be heated. Accordingly, when the prior art TN liquid crystal panel is utilized in the liquid crystal projection TV receiver set, reduction in performance of the liquid crystal panel is considerable. Yet, only an image display at a reduced luminosity is possible with the prior art TN liquid crystal panel.

From DE-A-31 37 518 a liquid crystal display is known comprising two substrates parallel to each other and comprising a liquid crystal layer inbetween. The liquid crystal display further comprises dielectric thin films laminated one above the other to form an anti-reflection structure capable of giving rise to an optical interference effect. Further features are disclosed in claim 1 of this reference.

EP-A-0 205 261 discloses a liquid crystal material to be used in a liquid crystal display.

An object of the present invention is to substantially eliminate the problems inherent in the prior art liquid crystal panels and the prior art projection TV receivers, and to provide an improved liquid crystal panel capable of displaying images at high luminance and in high quality to be suitable in high-definition television broadcasting systems

According to a first aspect of the invention, a liquid crystal panel comprises a first substrate having a plurality of pixel electrodes arranged in a matrix pattern and a plurality of switching elements connected with the pixel electrodes formed thereon; a second substrate having a counter electrode formed thereon and at least one dielectric thin film layer arranged between said substrate and said counter electrode; and a polymer dispersed liquid crystal layer sandwiched between the first and second substrates; said counter electrode being a transparent electroconductive thin film having an optical thickness of about $\lambda/2$, wherein $\lambda$ is the design wavelength of the panel; and said dielectric thin film layer having an index of refraction smaller than that of said counter electrode and greater than the index of refraction of said polymer dispersed liquid crystal layer in the transmitting state.

In accordance with a second aspect of the invention, a liquid crystal panel comprises a first substrate having a counter electrode formed thereon; a second substrate having a plurality of pixel electrodes arranged in a matrix pattern and a plurality of switching elements connected with the pixel electrodes formed thereon; a dielectric thin film layer arranged between said substrate and said pixel electrodes; and a polymer dispersed liquid crystal layer sandwiched between the first and second substrates; said pixel electrodes being in thin film form having an optical thickness of about $\lambda/2$ wherein $\lambda$ is the design wavelength of the panel; and said dielectric thin film layer having an index of refraction smaller than that of said pixel electrodes and greater than that of said dispersed liquid crystal layer in the transmitting state.

A projection-type display device according to the invention is built as defined in either claim 15 or claim 16. Preferable embodiments are defined in the dependent claims.


## BRIEF DESCRIPTION OF THE DRAWINGS

This and other objects and features of the present invention will become clear from the following description taken in conjunction with preferred embodiments thereof with reference to the accompanying drawings, in which like parts are designated by like reference numerals and in which:

Fig. 1 is a fragmentary sectional view of a liquid crystal panel according to one preferred embodiment of the present invention;

Fig. 2 is a diagram showing an electric equivalent circuit of the liquid crystal panel shown in Fig. 1;

Figs. 3(a) and 3(b) are diagrams showing respective modes of operation of polymer dispersion liquid crystal material;

Fig. 4 is a graph showing a spectral reflection characteristic of an anti-reflection film employed in one embodiment of the present invention;

Fig. 5 is a fragmentary sectional view of the liquid crystal panel according to one preferred embodiment of the present invention;

Fig. 6 is a graph showing a spectral reflection characteristic of an anti-reflection film employed in one embodiment of the present invention;

Fig. 7 is a fragmentary sectional view of the liquid crystal panel according to one preferred embodiment of the present invention;

Fig. 8 is a graph showing a spectral reflection characteristic of an anti-reflection film employed in one embodiment of the present invention;

Fig. 9 is a graph showing a spectral reflection characteristic of an anti-reflection film employed in one embodiment of the present invention;

Fig. 10 is a fragmentary sectional view of the liquid crystal panel according to one preferred embodiment of the present invention;

Fig. 11 is a graph showing a spectral reflection characteristic of an anti-reflection film employed in one embodiment of the present invention;

Fig. 12 is a graph showing a spectral reflection characteristic of an anti-reflection film employed in one embodiment of the present invention;

Fig. 13 is a fragmentary sectional view of the liquid crystal panel according to one preferred embodiment of the present invention;

Fig. 14 is a graph showing a spectral reflection characteristic of an anti-reflection film employed in one embodiment of the present invention;

Fig. 15 is a graph showing a spectral reflection characteristic of an anti-reflection film employed in one embodiment of the present invention;

Fig. 16 is a graph showing a spectral reflection characteristic of an anti-reflection film employed in one embodiment of the present invention;

Fig. 17 is a fragmentary sectional view of the liquid crystal panel according to one preferred embodiment of the present invention;

Fig. 18 is a fragmentary sectional view of the liquid crystal panel according to one preferred embodiment of the present invention;

Fig. 19 is a schematic diagram showing the structure of a liquid crystal projection television receiver set according to one embodiment of the present invention;

Fig. 20 is a schematic diagram showing the structure of a liquid crystal projection television receiver set according to one embodiment of the present invention;

Fig. 21 is a schematic diagram showing the structure of a liquid crystal projection television receiver set according to one embodiment of the present invention;

Fig. 22 is a fragmentary sectional view showing the prior art liquid crystal panel; and

Fig. 23 is a schematic diagram showing the structure of the prior art liquid crystal projection television receiver set.

## DETAILED DESCRIPTION OF THE EMBODIMENTS

Before the description of the various preferred embodiments of the present invention proceeds, it is to be noted that what is shown in the accompanying drawings is somewhat exaggerated for the purpose of illustration and does in no way represent an actual dimension and that any description which appears to be unnecessary in the light of subject matter of the present invention is not made for the sake of brevity.

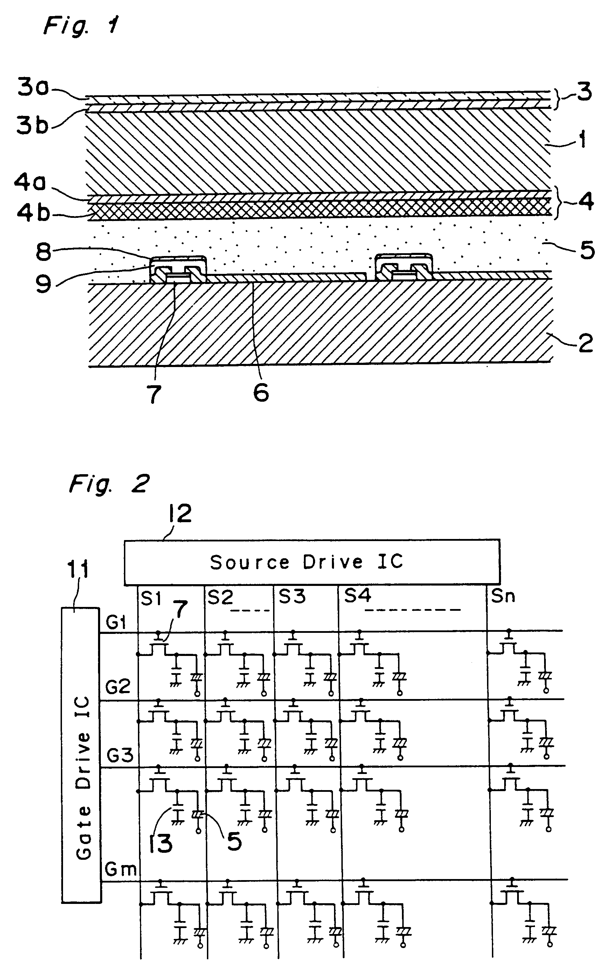

Fig. 1 illustrates a sectional representation of a liquid crystal panel according to the present invention. a layer of polymer dispersion liquid crystal 5 of 10 to 20 μm in thickness is sandwiched between a glass substrate 1, on which a counterelectrode is to be formed, and an array substrate 2 on which pixel electrodes are to be formed. The glass substrate 1 is employed in the form of a glass plate of 1.1 mm in thickness. One surface of the glass substrate 1 is formed with a counterelectrode having an anti-reflection effect. Specifically, a transparent multi-layered anti-reflection film 4 including a dielectric thin film 4a and an ITO thin film 4b functioning as a counterelectrode is formed on that surface of the glass substrate 1. The opposite surface of the glass plate 1 is also formed with an anti-reflection film 3. As a pixel structure, pixel electrodes employed in the prior art transmission-type liquid crystal panel and made of ITO are prepared into reflective electrodes 6 by forming metal thin films of Al or Cr on the array substrate 2. Light shielding films 8 are formed on thin film transistors 7 with intervention of respective insulating films 9. This is for the purpose of avoiding a photoconductor phenomenon which would occur when rays of light incident upon the liquid crystal layer 5 scatter and then enter semiconductor layers of the respective thin film transistors 7.

Fig. 2 illustrates an electric equivalent circuit of the liquid crystal panel of the present invention. For each pixel, a single thin film transistor 7 is formed as a switching element for controlling a signal to be applied to the pixel.

Each thin film transistor 7 is selectively switched on and off in response to a signal applied thereto from a gate drive integrated circuit (IC) 11 through a corresponding gate signal line G1 to Gm, and when the respective thin film transistor 7 is switched on, a video signal is applied to the associated pixel from a source drive integrated circuit (IC) 12 through a corresponding source signal line S1 to Sn. Each pixel also includes a the polymer dispersion liquid crystal 5, which may be regarded as a capacitor formed between the counterelectrode and the pixel electrodes, and an auxiliary capacitor 13.

The polymer dispersion liquid crystal will now be described. If liquid crystal is employed in the form of polymer dispersion liquid crystal, not only can the use of the polarizing plates be dispensed with, but also a display at a high luminance which may be three or more times that exhibited by the liquid crystal panel utilizing twisted nematic liquid crystal can be obtained. In the liquid crystal panel of the present invention, the polymer dispersion liquid crystal is employed and the material and the structure are optimized to provide a favorable scattering performance. Since no orientation film is needed as well, the manufacture for the liquid crystal panel can also be simplified.

The polymer dispersed liquid crystal can be classified into two types. One of them is the type in which droplets of liquid crystal are dispersed in polymer. Liquid crystal exists in polymer in a discontinuous fashion. This type of liquid crystal is hereinafter referred to as PDLC, and the liquid crystal panel employing this type of liquid crystal is hereinafter referred to as a PD liquid crystal panel. The other one is the type representing the structure in which a polymer network is caught in the liquid crystal layer, which is generally analogous to liquid crystal soaked in a sponge. The liquid crystal exists in a continuous fashion without representing droplets. This type of liquid crystal is hereinafter referred to as PNLC, and the liquid crystal panel employing this type of liquid crystal is hereinafter referred to as a PN liquid crystal panel. In order to permit any of the PD and PN liquid crystal panels to effect a display of an image, it can be achieved by controlling the scattering and transmission of light.

PDLC utilizes the nature of the liquid crystal exhibiting a different refractive index depending on the direction in which the liquid crystal is oriented. So long as no voltage is applied, liquid crystal droplets are irregularly oriented. In this condition, a difference in refractive index is created between the polymer and the liquid crystal and, therefore, the incident light scatters. When a voltage is subsequently applied while the light is scattering, the liquid crystal is oriented in a predetermined direction. Therefore, if the refractive index exhibited when the liquid crystal is oriented in the predetermined direction is matched with the refractive index of the polymer, the incident light does not scatter and pass therethrough.

In contrast thereto, PNLC makes use of the irregularity in orientation of the liquid crystal molecules. In an irregularly oriented condition, that is, when no voltage is applied, the incident light scatters. On the other hand, when a voltage is applied causing the liquid crystal molecules to be oriented regularly, the incident light passes therethrough.

It is to be noted that the behavior of the liquid crystal, either PDLC and PNLC, discussed above is so exaggerated as to facilitate a quick understanding thereof. Since in the embodiment of the present invention the PD liquid crystal panel is employed, the description that follows will be centered on the use of the PD liquid crystal, but the PN liquid crystal panel may be employed in the practice of the present invention. It is also to be noted that PDLC and PNLC will be collectively referred to as a polymer dispersion liquid crystal and that the PD liquid crystal panel and the PN liquid crystal panel will be collectively referred to as a polymer dispersion liquid crystal panel. Again, it is to be noted that a liquid medium containing liquid crystal to be injected into the polymer dispersion liquid crystal panel will be referred to as a liquid crystal solution and the condition in which a resin component contained in the liquid crystal solution is polymerized and cured will be referred to as a polymer.

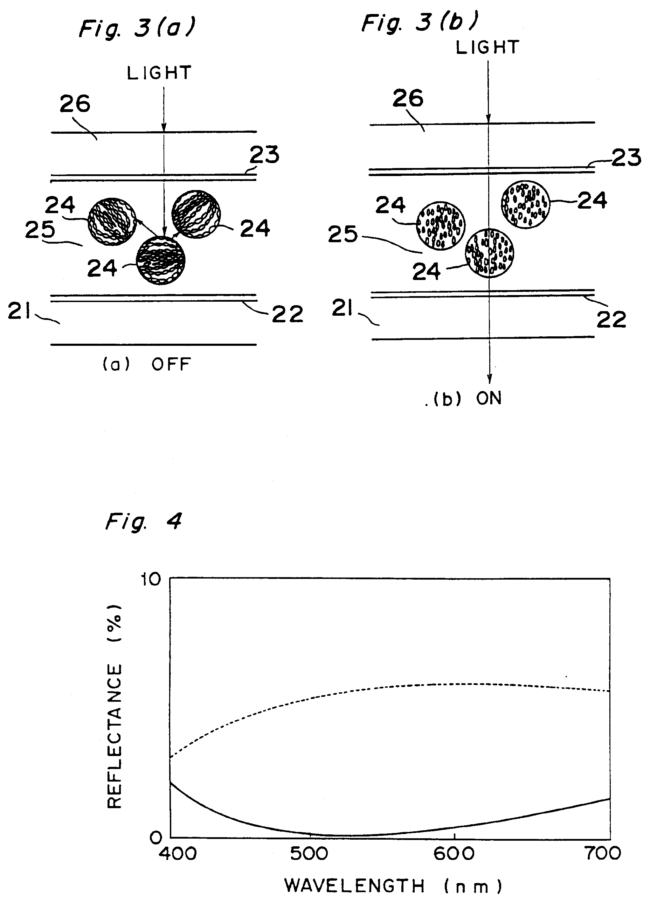

The behavior of the polymer dispersion liquid crystal will briefly discussed with reference to Figs. 3(a) and 3(b). A pixel electrode 22 formed on an array substrate 21 is connected with a corresponding thin film transistor (not shown) and is applied a voltage when the thin film transistor is switched on and off, thereby varying the direction of orientation of the liquid crystal on the pixel electrode 22 to modulate the incoming light. During the condition as shown in Fig. 3(a) in which no voltage has yet been applied, liquid crystal droplets 24 are oriented irregularly, and a difference in refractive index is produced between polymer 25 and the liquid crystal droplets 24 so that the incoming light having passed through a counterelectrode substrate 26 and a counterelectrode 23 scatters. Then, when as shown in Fig. 3(b) a voltage is applied to the pixel electrode 22, the liquid crystal 24 is oriented in one predetermined direction. If the refractive index exhibited when the liquid crystal 24 is oriented in the predetermined direction is matched with the refractive index of the polymer 25, the incident light does not scatter and emerges outwardly from the array substrate 21. It is to be noted that, when the liquid crystal is expressed in the form of droplets as is the case with PDLC, an average value of respective diameter of the liquid crystal droplets is referred to as an average particle size, but when in the form of a network as is the case with PNLC, an average value of respective diameters of holes in the network is referred to as an average pore size of the polymer network.

Where a high quality image display is desired with the use of the polymer dispersion liquid crystal, the ratio (hereinafter referred to as "contrast") between the amount of light in a scattered state (hereinafter referred to as "scattered light amount") and the amount of light in a transmitted state (hereinafter referred to as "transmitted light amount") must be chosen to be of a great value. If the contrast is low, a gradation display characteristic will be unsatisfactory. In the case where the liquid crystal projection TV receiver set is to be constructed, the contrast of 100 or higher is needed. Since the polymer dispersion liquid crystal does not require the use of any polarizing plates, the efficiency of utilization of light is satisfactorily high ranging from 80% to 85%. Accordingly, in order to increase the contrast, the scattered light amount has to be lowered. In order to reduce the scattered light amount, the film thickness of the liquid crystal has to be increased. However, increase of the film thickness of the liquid crystal requires an application of an increased voltage necessary to render the liquid crystal in a transmitting state, making it impossible to drive the liquid crystal. In view of this, in the present invention, the liquid crystal panel is so designed as to represent a reflection-type structure. In the reflection-type liquid crystal panel, the incoming light incident upon the liquid crystal panel passes the liquid crystal layer twice, i.e., when it enters and emerges into and from the liquid crystal panel, respectively, and therefore, a comparable scattering performance can be obtained with the liquid crystal film thickness which is half that employed in the transmission-type liquid crystal panel. Thus, by tailoring the liquid crystal panel to be of the reflection-type, a completely scattered state of light can be achieved and the contrast can be improved.

However, in the reflection-type liquid crystal panel, reflection occurring at the interface among the air, the counterelectrode substrate, the transparent electroconductive thin film forming the counterelectrode and the liquid crystal layer tends to lower the contrast.

The reflectance R(%) occurring at an interface between two different refractive indexes $n_A$ and $n_B$ can be given by the following equation:

$$R = \{(n_A - n_B)/(n_A + n_B)\}^2 \times 100 \tag{1}$$

Where the counterelectrode substrate is in the form of a glass plate, and assuming that the glass plate has a refractive index of 1.52 and air has a refractive index of 1.0, the reflectance at the interface between the glass substrate and the air will be about 4%.

Also, where a thin film having a film thickness d and a refractive index $n_C$ is formed between the two refractive indexes $n_A$ and $n_B$, the reflectance R(%) at a wavelength $\lambda$ can be given by the following equation.

$$R = \{(r_1^2 + r_2^2 + 2r_1 r_2 \cos\epsilon) \div (1 + r_1^2 + r_2^2 + 2r_1 r_2 \cos\epsilon)\} \times 100 \tag{2}$$

wherein:

$$r_1 = (n_C - n_A)/(n_C + n_A)$$

$$r_2 = (n_B - n_C)/(n_B + n_C), \text{ and}$$

$$\epsilon = (4\pi n_C d)/\lambda$$

Where ITO is employed as material for the transparent electroconductive thin film which eventually forms the counterelectrode, and if this has a refractive index of 2, the glass substrate has a refractive index of 1.52 and the liquid crystal layer has a refractive index of 1.6, the reflectance amounts to a maximum value of about 6% at a particular wavelength depending on the thickness of the thin film.

Accordingly, when the reflection type is constructed using such liquid crystal panel as hereinabove described, a maximum amount of 10% of the incoming light will be reflected without entering the liquid crystal layer. This reflection results in a reduction of the contrast and, in the case of 10% reflectance, the maximum contrast attainable will be 100/10 and, hence, about 10.

Accordingly, in the liquid crystal panel of the present invention, the anti-reflection film is formed on the glass substrate on which the counterelectrode is formed. In order to reduce the reflection which takes place at the interface at opposite surfaces of the ITO thin film which forms the counterelectrode, the anti-reflection film may suffices to be of a multi-layered structure including at least two thin films, i.e., the transparent dielectric thin film and the ITO thin film each having a refractive index and a film thickness both satisfying specific conditions. In the case of the double-layered structure, conditions required to minimize the reflectance are given by the following equations:

$$n_1^2 = n_G n_{LC} \tag{3}$$

$$n_1 d_1 = n_2 d_2/2 = \lambda/4 \tag{4}$$

or

$$(n_2/n_1)^2 = (n_{LC}/n_G) \tag{5}$$

6

$$n_1 d_1 = n_2 d_2 = \lambda/4 \qquad (6)$$

wherein $n_G$ represents the refractive index of the glass substrate; $n_{LC}$ represents the refractive index of the liquid crystal layer; $n_1$ represents the refractive index of a thin film formed between the glass substrate and the ITO thin film; $n_2$ represents the refractive index of the ITO thin film; $d_1$ represents the film thickness of the thin film formed between the glass substrate and the ITO thin film; $d_2$ represents the film thickness of the ITO thin film; and $\lambda$ represents the main wavelength of design. The thin film formed between the glass substrate and the ITO thin film may be formed between the liquid crystal layer and the ITO thin film. In this case, the film thickness $d_i$ (i = 1, 2) means a physical film thickness and $n_i d_i$ means an optical film thickness.

While the foregoing equations represent the anti-reflection condition at the particular wavelength $\lambda$, it is preferred that the conditions given by the equation (3) and (4), rather than the equations (5) and (6), should be satisfied where the reflection at a large wavelength region is desired to be reduced. Also, since the ITO thin film acquires a sufficient resistance value, the physical film thickness is preferred to be at least 100 nm or greater. In view of this, the conditions given by the equations (3) and (4), in which a condition for the optical film thickness $n_2 d_2$ of the ITO thin film represents $\lambda/2$, are preferred.

The anti-reflection film 4 shown in Fig. 1 is prepared using the foregoing equations. This is of a double-layered structure wherein the dielectric thin film 4a having a refractive index higher than that of the glass substrate 1 and lower than that of the ITO thin film 4b and the ITO thin film 4b forming the counterelectrode are employed, said ITO thin film 4b having an optical film thickness of $\lambda/2$ and said thin film 4a having an optical film thickness of $\lambda/4$.

One specific example of the structure is shown in Table 1, and the spectral reflectance thereof is shown in Fig. 4. In Fig. 4, a curve shown by the solid line represents the spectral reflectance exhibited by the structure shown in Table 1 whereas a curve shown by the dotted line represents the spectral reflectance exhibited by the structure formed only with the ITO thin film. As can be understood from Fig. 4, the structure shown in Table 1 makes it possible to realize the characteristic in which the reflectance is below 0.3% over a wavelength bandwidth of 100 nm or higher, sufficient enough to considerably reduce the reflected light.

Table 1

| | Main Wavelength: $\lambda$=520 nm | | |
| --- | --- | --- | --- |
| Material | Refractive Index | Optical Thickness of Thin Film (nm) | Physical Thickness of Thin Film (nm) |
| Glass | 1.52 | --- | --- |
| $Al_2O_3$ | 1.62 | 130.0 | 80.2 |
| ITO | 2.00 | 260.0 | 130.0 |
| LC | 1.60 | --- | --- |

In Table 1 above, LC represents the liquid crystal.

Preferably, the refractive index of the thin film 14a is within the range of 1.50 to 1.70, and, although in the example shown in Table 1 $Al_2O_3$ is employed, any one of $CeF_3$, SiO, $WO_3$ and $NdF_3$ may be employed.

The other surface of the glass substrate 1 is formed with the anti-reflection film 3. This anti-reflection film 3 is for the purpose of avoiding a reflection which takes place at an interface between the air and the glass substrate 1 and is of a double-layered structure including two dielectric thin films 3a and 3b. A specific example of the anti-reflection film 3 may be of the structure in which, in the successive order from the glass substrate 1, SiO of nd = $\lambda/4$ and $MgF_2$ of nd = $\lambda/4$, or $Y_2O_3$ of nd = $\lambda/4$ and $MgF_2$ of nd = $\lambda/4$, are laminated. It is to be noted that, since SiO has an absorption band in a region of blue, the use of $Y_2O_3$ is recommended where the blue-color light is to be modulated. At this time, $\lambda$ represents the center wavelength of light to be modulated. It is also to be noted that n represents the refractive index of the thin film and d represents the physical film thickness.

In the case of the liquid crystal projection TV receiver set utilizing three liquid crystal panels capable of modulating rays of light of respective wavelengths of red, green and blue light, each of these liquid crystal panels is to be provided with the anti-reflection film of an optimum film thickness chosen in consideration of the center wavelength of the light incident on the respective liquid crystal panel.

Although in the present embodiment the anti-reflection film 3 is of the double-layered structure, in the case of the liquid crystal projection TV receiver set in which a single liquid crystal panel is employed with white light incident thereon, the anti-reflection film 3 may be of a multi-layered structure including three or more thin films to enhance an anti-refection effect over a relatively large wavelength region. A specific example of the three-layered structure for the anti-reflection film may include $Al_2O_3$ of nd = $\lambda/4$ , $ZrO_2$ of nd = $\lambda/2$ and $MgF_2$ of nd = $\lambda/4$ laminated in the successive order from the glass substrate.

In a transparent dielectric thin film is formed on each side of the ITO thin film which forms the counterelectrode to provide a three-layered structure, not only can the reflectance be further reduced, but also the anti-reflection effect over a larger wavelength region can be appreciated, as compared with the double-layered structure. In such case, conditions for the refractive index and the film thickness are given by the following equations:

$$(n_3/n_1)^2 = n_{LC}/n_G \tag{7}$$

$$n_1d_1 = n_2d_2/2 = n_3d_3 = \lambda/4 \tag{8}$$

or

$$(n_1n_3)^2 = n_2^3 n_G n_{LC} \tag{9}$$

$$n_1d_1 = n_2d_2 = n_3d_3 = \lambda/4 \tag{10}$$

It is to be noted that $n_3$ represents the refractive index of a thin film to be formed between the ITO thin film and the liquid crystal and $d_3$ represents the film thickness of the thin film to be formed between the ITO thin film and the liquid crystal. Other characters are the same as employed in the equations (3) to (6).

While even the foregoing equations represent the anti-reflection condition at the particular wavelength $\lambda$, it is preferred that the conditions given by the equation (7) and (8), rather than the equations (9) and (10), should be satisfied where the reflection at a large wavelength region is desired to be reduced. Also, since the ITO thin film acquires a sufficient resistance value, the physical film thickness is preferred to be at least 100 nm or greater. In view of this, the conditions given by the equations (7) and (8), in which a condition for the optical film thickness $n_2d_2$ of the ITO thin film represents $\lambda/2$, are preferred.

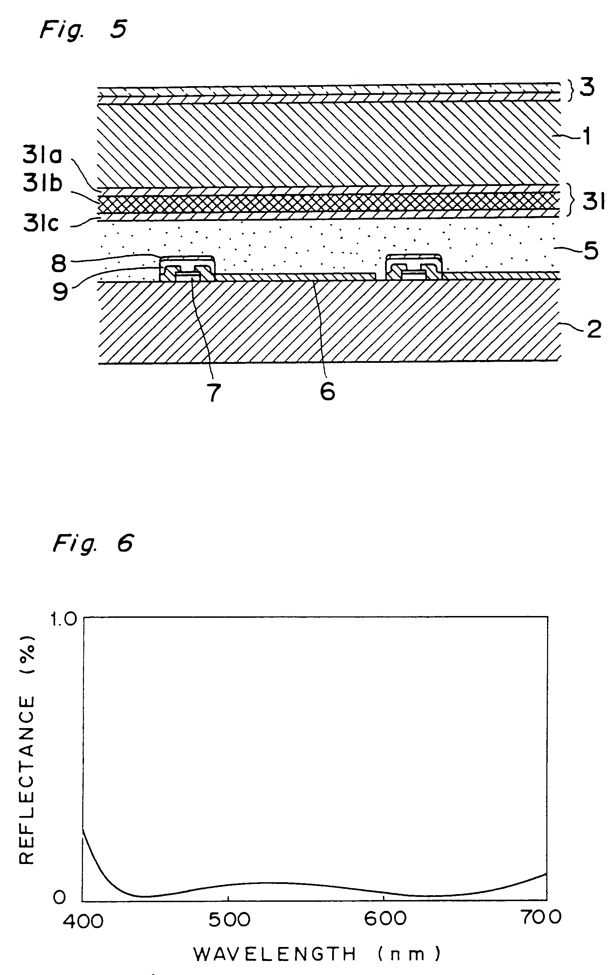

A sectional representation of a different embodiment of the liquid crystal panel of the present invention which has been prepared using the condition equations (7) and (8) is shown in Fig. 5. Other than a anti-reflection film 31, the liquid crystal panel of Fig. 5 is substantially similar in structure to that shown in Fig. 1.

The anti-reflection film 31 is of a three-layered structure including, in the successive order from the glass substrate 1, a first dielectric thin film 31a, an ITO thin film 31b and a second dielectric thin film 31C, said ITO thin film 31b having an optical film thickness of $\lambda/2$ and each of said first and send thin films 31a and 31c having an optical film thickness of $\lambda/4$.

A specific example of the structure is shown in Table 2, and the spectral reflectance thereof is shown in Fig. 6.

Table 2

| | | Main Wavelength: $\lambda$=520 nm | |
|---|---|---|---|
| Material | Refractive Index | Optical Thickness of Thin Film (nm) | Physical Thickness of Thin Film (nm) |
| Glass | 1.52 | --- | --- |
| SiO | 1.70 | 130.0 | 76.5 |
| ITO | 2.00 | 260.0 | 130.0 |
| SiO | 1.70 | 130.0 | 76.5 |
| LC | 1.60 | --- | --- |

According to the structure shown in Table 2 above, it possible to realize the characteristic in which the reflectance is below 0.1% over a wavelength bandwidth of 200 nm or higher, sufficient enough to considerably reduce the reflected light.

Preferably, the refractive index of each of the first and second thin films 31a and 31c is within the range of 1.60 to 1.80, and, although in the example shown in Table 2 SiO is employed, any one of $Al_2O_3$, $Y_2O_3$, MgO, $CeF_3$, $WO_3$ and $PbF_2$ may be employed.

In the foregoing embodiments, of material actually available for the thin film or films, no thin film that completely satisfy the condition for the refractive index expressed by the equation (3) or (7) exist in most cases. In such case, a thin film having a refractive index approximately satisfying the condition is chosen.

Also, if one or both of the thin films to be formed between the glass substrate and the ITO thin film and the thin film to be formed between the ITO thin film and the liquid crystal layer is made in the form of an alternating multi-layered structure in which respective layers of low and high refractive indexes of a value approximating the refractive index required according to the condition expressed by the associated equation (3) or (7) alternate with each other, and if the film thickness of those layers is properly optimized, not only can a thin film having an arbitrary chosen refractive index be chosen, but also a desired anti-reflection characteristic can be analogically obtained. According to this method, not only can the freedom of choice of the refractive index be available in selecting a particular material for the thin film, but also advantages can be appreciated in respect of durability, uniformity and film forming easiness. Even in such case, the optical film thickness $n_2d_2$ of the ITO thin film is to be chosen $\lambda/2$ according to the equations (4) and (8).

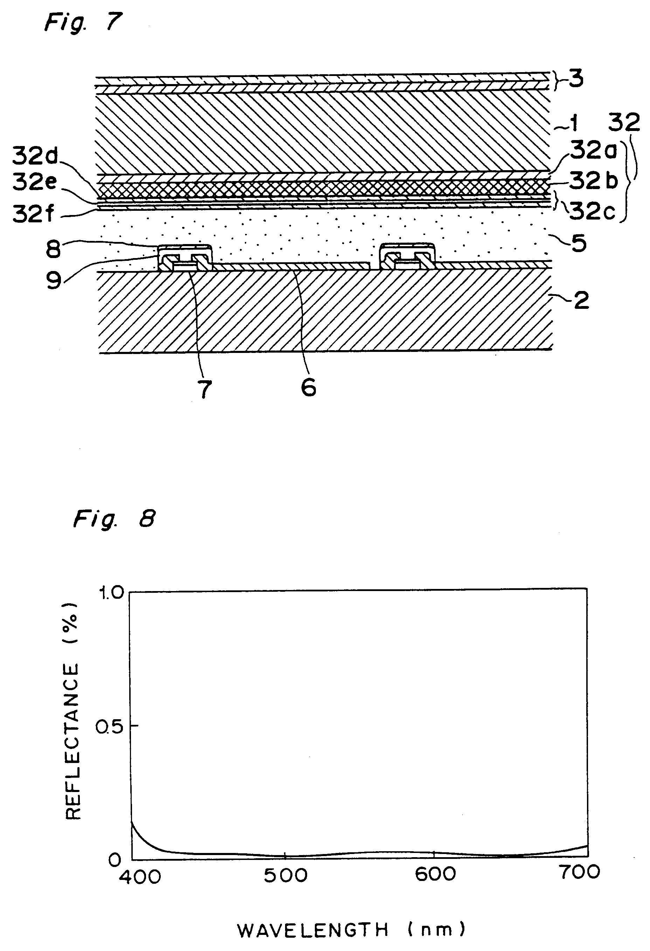

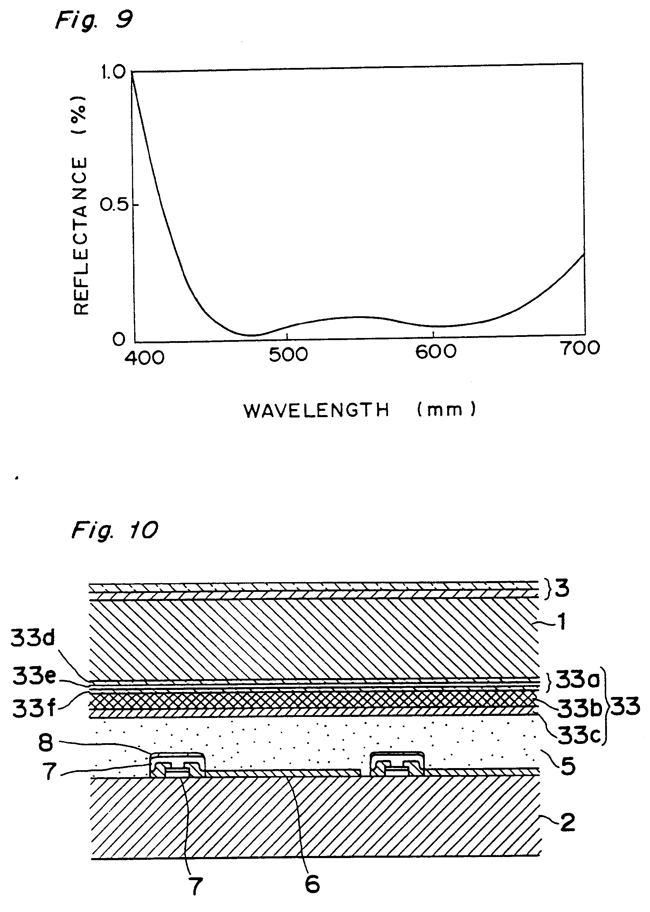

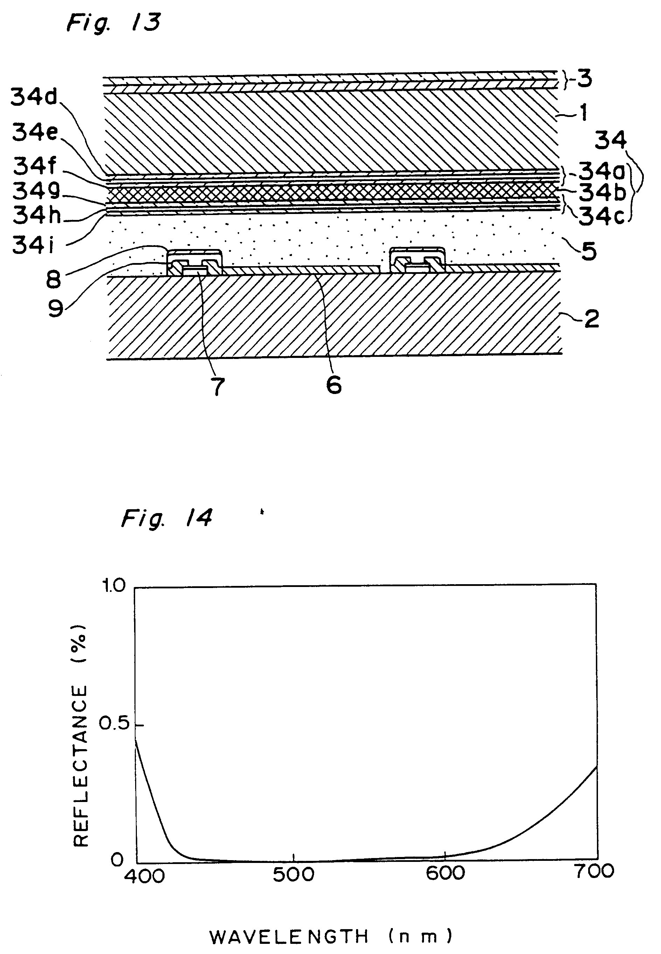

Further embodiments of the liquid crystal panel of the present invention are shown in Figs. 7, 10 and 13, respectively. Even the liquid crystal panel shown in any one of Figs. 7, 10 and 13 is similar to that shown in Fig. 1, except for an anti-reflection film 32 in Fig. 7, an anti-reflection film 33 in Fig. 10 and an anti-reflection film 34 in Fig. 13.

The anti-reflection film 32 shown in Fig. 7 is of a structure wherein a first thin film 32a, an ITO thin film 32b for the counterelectrode and a second thin film 32c laminated in the successive order from the glass substrate 1, said second thin film 32c including a three-layered structure including a low refractive index layer 32d, a high refractive index layer 32e and a low refractive index layer 32f. The ITO thin film 32b has an optical film thickness of $\lambda/2$ and the first thin film 32a has an optical film thickness of $\lambda/4$.

A specific example of the structure is shown in Tables 3 and 4, and the spectral reflectance thereof is shown in Figs. 8 and 9.

As can be understood from Figs. 8 and 9, with the structure shown in Tables 3 and 4, it possible to realize the characteristic in which the reflectance is below 0.1% over a wavelength bandwidth of 200 nm or higher, sufficient enough to considerably reduce the reflected light.

Table 3

| | | | Main Wavelength: $\lambda$=540 nm |
| Material | Refractive Index | Optical Thickness of Thin Film (nm) | Physical Thickness of Thin Film (nm) |
| --- | --- | --- | --- |
| Glass | 1.52 | --- | --- |
| SiO | 1.70 | 135.0 | 79.4 |
| ITO | 2.00 | 270.0 | 135.0 |
| $Al_2O_3$ | 1.62 | 55.4 | 34.2 |
| $ZrO_2$ | 2.05 | 23.0 | 11.2 |
| $Al_2O_3$ | 1.62 | 55.4 | 34.2 |
| LC | 1.60 | --- | --- |

Table 4

| | | | Main Wavelength: $\lambda$=440 nm |
| Material | Refractive Index | Optical Thickness of Thin Film (nm) | Physical Thickness of Thin Film (nm) |
| --- | --- | --- | --- |
| Glass | 1.52 | --- | --- |
| $Y_2O_3$ | 1.78 | 110.0 | 61.8 |
| ITO | 2.00 | 220.0 | 110.0 |
| $SiO_2$ | 1.46 | 44.0 | 30.1 |
| $TiO_2$ | 2.30 | 33.0 | 14.4 |

Table 4 (continued)

| | | Main Wavelength: λ=440 nm | |
|---|---|---|---|
| Material | Refractive Index | Optical Thickness of Thin Film (nm) | Physical Thickness of Thin Film (nm) |
| SiO$_2$ | 1.46 | 33.4 | 22.6 |
| LC | 1.60 | --- | --- |

With the structure shown in Fig. 7, by making the second thin film 32c in the form of a three-layered structure including the low refractive index layer 32d, the high refractive index layer 32e and the low refractive index layer 32f and by optimizing the film thickness of each of the layers 32d, 32e and 32f, the refractive index of each of the low refractive index layers 32d and 32f, the high refractive index layer 32e and the first thin film 32a can be selected from thin film material having an arbitrarily chosen refractive index and, yet, a desired anti-reflection effect can easily be obtained.

Preferably, the refractive index of the low refractive index layer is within the range of 1.3 to 1.7 and that of the high refractive index layer is within the range of 1.7 to 2.3.

Material for each of the low refractive index layers 32d and 32f may be employed in the form of MgF$_2$, CeF$_2$ and SiO other than Al$_2$O$_3$ and SiO$_2$ such as shown in Tables 3 and 4. Also, material for the high refractive index layer 32e may be employed in the form of Y$_2$O$_3$, HfO$_2$, Ta$_2$O$_5$, CeO$_2$ and ZnS other than ZrO$_2$ and TiO$_2$.

Preferably, the thin film 32a has a refractive index within the range of 1.6 to 1.8, and material therefor may be employed in the form of Al$_2$O$_3$, MgO, WO$_3$, CeF$_3$ and PbF$_2$ other than Y$_2$O$_3$ and SiO such as shown in Tables 3 and 4.

While the thin film 32c is shown to be of the three-layered structure, it may be of a multi-layered structure including two, four or more layers.

Although the thin film 32c has been shown as including the low refractive index layer 32d, the high refractive index layer 32e and the low refractive index layer 32f disposed in the successive order from the glass substrate 1, the low refractive index layers and the high refractive index layer may be reversed in position so that the thin film 32c includes the high refractive index layer, the low refractive index layer and the high refractive index layer laminated in the successive order from the glass substrate 1.

The anti-reflection film 33 shown in Fig. 10 includes a first thin film 33a, an ITO thin film 33b for the counterelectrode and a second thin film 33c laminated in the successive order from the glass substrate 1, said first thin film 33a being of a three-layered structure including a low refractive index layer 33d, a high refractive index layer 33e and a low refractive index layer 33f. The ITO thin film 33b has an optical film thickness of λ/2 and the second thin film 33c has an optical film thickness of λ/4.

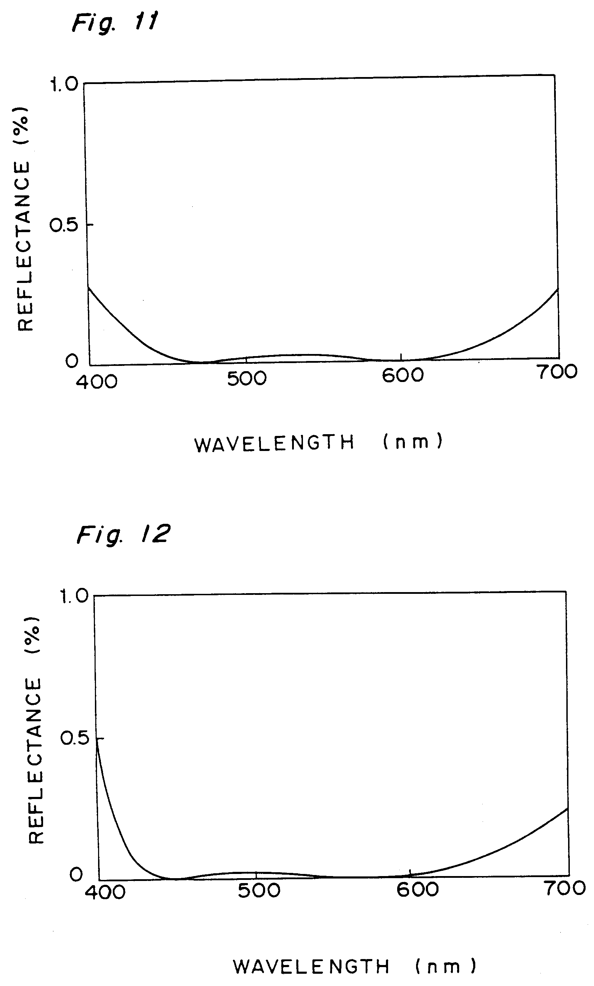

A specific example of the structure is shown in Tables 5 and 6, and the spectral reflectance thereof is shown in Figs. 11 and 12.

As can be understood from Figs. 11 and 12, with the structure shown in Tables 5 and 6, it possible to realize the characteristic in which the reflectance is below 0.1% over a wavelength bandwidth of 200 nm or higher, sufficient enough to considerably reduce the reflected light.

Table 5

| | | Main wavelength: λ=440 nm | |
|---|---|---|---|
| Material | Refractive Index | Optical Thickness of Thin Film (nm) | Physical Thickness of Thin Film (nm) |
| Glass | 1.52 | --- | --- |
| Al$_2$O$_2$ | 1.62 | 44.0 | 27.2 |
| ZrO$_2$ | 2.05 | 17.6 | 8.6 |
| Al$_2$O$_3$ | 1.62 | 55.0 | 34.0 |
| ITO | 2.00 | 220.0 | 110.2 |
| Y$_2$O$_3$ | 1.78 | 110.0 | 70.2 |
| LC | 1.60 | --- | --- |

Table 6

|  | Main Wavelength: λ=560 nm | | |
| Material | Refractive Index | Optical Thickness of Thin Film (nm) | Physical Thickness of Thin Film (nm) |
| --- | --- | --- | --- |
| Glass | 1.52 | --- | --- |
| $SiO_2$ | 1.46 | 57.4 | 39.3 |
| $TiO_2$ | 2.30 | 25.2 | 11.0 |
| $SiO_2$ | 1.46 | 57.4 | 39.3 |
| ITO | 2.00 | 280.0 | 140.0 |
| SiO | 1.70 | 140.0 | 82.4 |
| LC | 1.60 | --- | --- |

Even with the structure shown in Fig. 10, by making the first thin film 33a in the form of a three-layered structure including the low refractive index layer 33d, the high refractive index layer 33e and the low refractive index layer 33f and by optimizing the film thickness of each of the layers 33d, 33e and 33f, the refractive index of each of the low refractive index layers 33d and 33f, the high refractive index layer 33e and the second thin film 33c can be selected from thin film material having an arbitrarily chosen refractive index and, yet, a desired anti-reflection effect can easily be obtained.

As is the case with Fig. 7, the refractive index of the low refractive index layer is preferably within the range of 1.3 to 1.7 and that of the high refractive index layer is preferably within the range of 1.7 to 2.3.

Material for each of the low refractive index layers 33d and 33f may be employed in the form of $MgF_2$, $CeF_2$ and SiO other than $Al_2O_3$ and $SiO_2$ such as shown, in Tables 5 and 6. Also, material for the high refractive index layer 33e may be employed in the form of $Y_2O_3$, $HfO_2$, $Ta_2O_5$, $CeO_2$ and ZnS other than $ZrO_2$ and $TiO_2$.

Also as is the case with Fig. 7, the thin film 33c has a refractive index preferably within the range of 1.6 to 1.8, and material therefor may be employed in the form of $Al_2O_3$, MgO, $WO_3$, $CeF_3$ and $PbF_2$ other than $Y_2O_3$ and SiO such as shown in Tables 5 and 6.

While in Fig. 10 the thin film 33a is shown to be of the three-layered structure, it may be of a multi-layered structure including two, four or more layers.

Although the thin film 33a has been shown as including the low refractive index layer 33d, the high refractive index layer 33e and the low refractive index layer 33f disposed in the successive order from the glass substrate 1, the low refractive index layers and the high refractive index layer may be reversed in position so that the thin film 33a includes the high refractive index layer, the low refractive index layer and the high refractive index layer laminated in the successive order from the glass substrate 1.

The anti-reflection film 34 shown in Fig. 13 includes a first thin film 34a, an ITO thin film 34b for the counterelectrode and a second thin film 34c laminated in the successive order from the glass substrate 1, said first thin film 34a being of a three-layered structure including a low refractive index layer 34d, a high refractive index layer 34e and a low refractive index layer 34f and, at the same time, the second thin film 34c being of a three-layered structure including a low refractive index layer 34g, a high refractive index layer 34h and a low refractive index layer 34i. The ITO thin film 34b has an optical film thickness of λ/2.

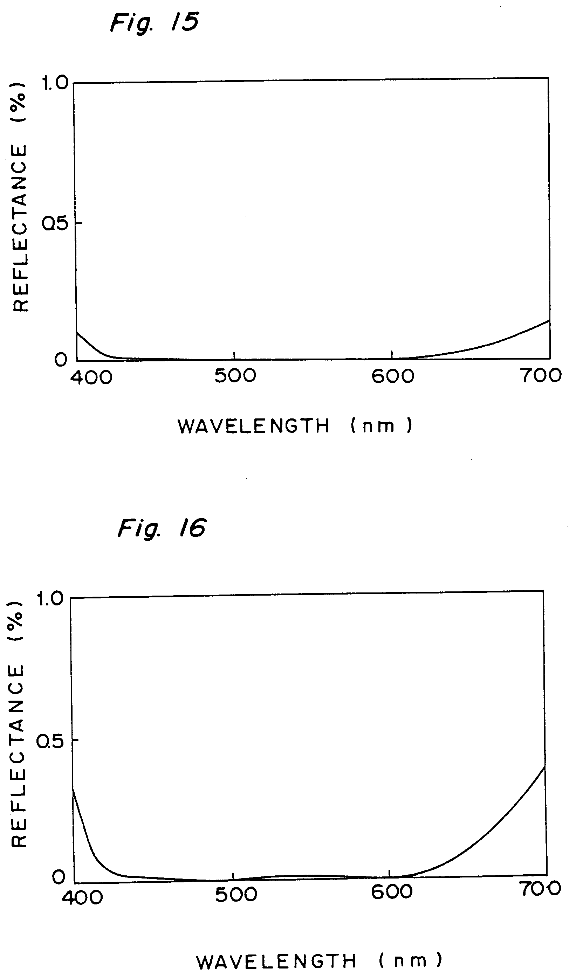

A specific example of the structure is shown in Tables 7, 8 and 9, and the spectral reflectance thereof is shown in Figs. 14, 15 and 16.

With the structure shown in Tables 7 to 9, it possible to realize the characteristic in which the reflectance is below 0.1% over a wavelength bandwidth of 200 nm or higher, sufficient enough to considerably reduce the reflected light.

Table 7

|  | Main Wavelength: λ=600 nm | | |
| Material | Refractive Index | Optical Thickness of Thin Film (nm) | Physical Thickness of Thin Film (nm) |
| --- | --- | --- | --- |
| Glass | 1.52 | --- | --- |

Table 7 (continued)

| Material | Refractive Index | Optical Thickness of Thin Film (nm) | Physical Thickness of Thin Film (nm) |
|---|---|---|---|
| | | | Main Wavelength: $\lambda$=600 nm |
| $SiO_2$ | 1.46 | 63.0 | 43.2 |
| $TiO_2$ | 2.30 | 24.0 | 10.4 |
| $Si_2O_2$ | 1.46 | 63.0 | 43.2 |
| ITO | 2.00 | 300.0 | 150.0 |
| $SiO_2$ | 1.46 | 61.5 | 42.1 |
| $TiO_2$ | 2.30 | 27.0 | 11.7 |
| $SiO_2$ | 1.46 | 61.5 | 42.1 |
| LC | 1.60 | --- | --- |

Table 8

| Material | Refractive Index | Optical Thickness of Thin Film (nm) | Physical Thickness of Thin Film (nm) |
|---|---|---|---|
| | | | Main Wavelength: $\lambda$=540 nm |
| Glass | 1.52 | --- | --- |
| $Al_2O_3$ | 1.62 | 60.8 | 37.5 |
| $ZrO_2$ | 2.05 | 13.5 | 6.6 |
| $Al_2O_3$ | 1.62 | 60.8 | 37.5 |
| ITO | 2.00 | 270.0 | 135.0 |
| $Al_2O_3$ | 1.62 | 56.7 | 35.0 |
| $ZrO_2$ | 2.05 | 21.6 | 10.5 |
| $Al_2O_3$ | 1.62 | 56.7 | 35.0 |
| LC | 1.60 | --- | --- |

Table 9

| Material | Refractive Index | Optical Thickness of Thin Film (nm) | Physical Thickness of Thin Film (nm) |
|---|---|---|---|
| | | | Main Wavelength: $\lambda$=600 nm |
| Glass | 1.52 | --- | --- |
| $MgF_2$ | 1.39 | 42.0 | 30.2 |
| $Y_2O_3$ | 1.78 | 66.0 | 37.1 |
| $MgF_2$ | 1.30 | 42.0 | 30.2 |
| ITO | 2.00 | 300.00 | 150.0 |
| $MgF_2$ | 1.39 | 36.0 | 25.9 |
| $Y_2O_3$ | 1.78 | 78.0 | 43.8 |

Table 9 (continued)

| | | Main Wavelength: $\lambda$=600 nm | |
| Material | Refractive Index | Optical Thickness of Thin Film (nm) | Physical Thickness of Thin Film (nm) |
|---|---|---|---|
| $MgF_2$ | 1.39 | 36.0 | 25.9 |
| LC | 1.60 | --- | --- |

Even with the structure shown in Fig. 13 by making the first thin film 34a in the form of a three-layered structure including the low refractive index layer 34d, the high refractive index layer 34e and the low refractive index layer 34f, by making the second thin film 34c in the form of a three-layered structure including the low refractive index layer 34g, the high refractive index layer 34h and the low refractive index layer 34i, and by optimizing the film thickness of each of the layers 34d, 34e and 34f, 34g, 34h and 34i, the refractive index of each of the low refractive index layers 34d, 34f, 34g and 34i and the high refractive index layers 34e and 34f can be selected from thin film material having an arbitrarily chosen refractive index and, yet, a desired anti-reflection effect can easily be obtained.

As is the case with Fig. 7, the refractive index of the low refractive index layer is preferably within the range of 1.3 to 1.7 and that of the high refractive index layer is preferably within the range of 1.7 to 2.3.

Material for each of the low refractive index layers 34d, 34f, 34g and 34i may be employed in the form of $CeF_2$ and SiO other than $MgF_2$, $Al_2O_3$ and $SiO_2$ such as shown in Tables 7 to 9. Also, material for the high refractive index layers 34e and 34h may be employed in the form of $HfO_2$, $Ta_2O_5$, $CeO_2$ and ZnS other than $ZrO_2$ and $TiO_2$ and $Y_2O_3$.

While in Fig. 13 each thin film 34a and 34c is shown to be of the three-layered structure, it may be of a multi-layered structure including two, four or more layers. Also, while for ease of vapor deposition the same material is employed for the low refractive index layers 34d, 34f, 34g and 34i and the high refractive index layers 34e and 34h forming the respective thin films 34a and 34c, different material may be employed therefor.

Although each thin film 34a and 34c has been shown as including the low refractive index layer, the high refractive index layer and the low refractive index layer disposed, in the successive order from the glass substrate 1, the low refractive index layers and the high refractive index layer may be reversed in position so that the respective thin film includes the high refractive index layer, the low refractive index layer and the high refractive index layer laminated in the successive order from the glass substrate 1.

In the embodiment or embodiments hereinabove described, the thin film to be formed between the ITO thin film and the liquid crystal layer will lower the voltage applied to the ITO thin film, but no problem will substantially occur if the physical film thickness is of a value below 100 nm. Conversely, it contributes to an increase in retentivity of the liquid crystal layer. Also, in either case, the physical thickness of the ITO thin film is of a value exceeding 100 nm. If the ITO has a physical film thickness of 100 nm or greater, it can be formed by means of a vapor deposition technique or a sputtering technique at a temperature exceeding 200°C, giving a sufficient resistance value.

As hereinbefore discussed, the formation of the anti-reflection film on the opposite surfaces of the glass substrate which forms the counterelectrode substrate, the reflectance of light can be reduced considerably. It is obvious that the anti-reflection film formed on the surface of the glass substrate which is held in contact with the air may not be formed provided that an optical coupling with other structural elements is employed or in a similar situation. Important to note in the present invention is that the multi-layered anti-reflection film is formed using as a structural element the ITO thin film which forms the counterelectrode. As a matter of course, the ITO thin film is constructed or formed so as to permit an application of a common electrode potential or the like. It is to be noted that the ITO thin film referred herein means an oxide of an alloy of indium and tin and will not be affected by an alloy mixing ratio or an oxidized state and may be broadly interpreted as meaning tin oxide or indium oxide.

The anti-reflection film employed in the liquid crystal panel of the present invention can exhibit its maximum performance when a medium is employed in the form of liquid crystal. This is because the liquid crystal has a refractive index approximating to the refractive index (n = 1.52) of the glass substrate. Where the liquid crystal is a polymer dispersion liquid crystal, the refractive index thereof in the transmitting state is $n_o$ = 1.50 to 1.53 and that in the scattering state is $n_x$ = 1.60 to 1.65. In particular where the liquid crystal panel is of a reflection type, it is necessary to reduce the reflectance associated with the ITO thin film when in the scattering state. In other words, the liquid crystal panel of the present invention is formed with the optimum anti-reflection film which is effective to maximize the reduction in reflectance when the liquid crystal has a refractive index within the range of 1.60 to 1.65.

The liquid crystal material which may be employed in the liquid crystal panel of the present invention includes nematic liquid crystal, smectic liquid crystal or cholesteric liquid crystal, which may or may not be mixed with one or more of liquid crystal compounds and/or any other compounds than the liquid crystal compounds. Of the various liquid crystal material referred to above, cyanobiphenyl nematic liquid crystal, which has a large difference between the extra-ordinary refractive index $n_e$ and the ordinary refractive index $n_o$, or fluorine nematic liquid crystal which has a high stability in physical property is preferred. When cyanobiphenyl nematic liquid crystal is employed, the polymer dispersion liquid crystal layer having a high scattering performance can be obtained. While fluorine nematic liquid crystal is excellent in respect of the stability in physical property as compared with the cyanobiphenyl nematic liquid crystal, the difference between $n_e$ and $n_o$ is so small as to exhibit a low scattering performance. However, where the liquid crystal panel is employed as a light valve in the projection type TV receiver set, a relatively high heat resistance and a relatively high light-proof are required and, where these requirements are important, fluorine nematic liquid crystal should be employed. Since the fluorine type has a low specific dielectric constant, the liquid crystal layer having a substantial thickness can be driven by a few volts and, therefore, an increase in film thickness may result in an increase in scattering performance. A transparent polymer is preferred for the high polymer matrix material, examples of which may include thermoplastic resin, thermosetting resin and light-curable resin. While any of these resins may be employed, UV-curable resin is preferred in view of ease for the manufacturing step and the point of separation of the liquid crystal phase. A specific example of the UV-curable resin includes a UV-curable acrylic resin and the UV-curable acrylic resin containing acrylic monomer or oligomer that can be cured upon irradiation of UV-rays of light is more preferred.

Examples of the polymer forming monomer include 2-ethylhexyl acrylate, 2-hydroxyethyl acrylate, neopentyl glycold acrylate, hexanediole diacrylate, diethylenglycol diacrylate, tripropyleneglycol diacrylate, polyethyleneglycol diacrylate, trimethylolpropane triacrylate, pentaerythritol acrylate and so on.

Examples of the oligomer or prepolymer include polyester acrylate, epoxy acrylate, polyurethane acrylate and so on.

A polymerization accelerator for accelerating the polymerization may be employed, examples of which include 2-hydroxy-2-methyl-1-phenylpropane-1-on ("DILOCURE" manufactured and sold by Merck & Co., Inc.), 1-(4-isopropylphenyl)-2-hydroxy-2-methylpropane-1-on ("DILOCURE" manufactured and sold by Merck & Co., Inc.), 1-hydroxycyclohexyl phenylketone ("INGACURE 184" manufactured and sold by Ciba-Geigy Ltd.), benzylmethylketal ("INGACURE 651" manufactured and sold by Ciba-Geigy Ltd.) and so on. As arbitrarily chosen components, a chain transfer agent, a photosentisizer, dyes, a crosslinking agent and others may be suitably employed.

Although the content of liquid crystal material contained in the polymer dispersion liquid crystal layer may not be always limited, 20 to 90 wt%, preferably 50 to 85 wt%, is generally employed. If this content is not greater than 20 wt%, the amount of the liquid crystal droplets is sufficient and no satisfactory scattering effect can be obtained. On the other hand, if the content is not greater than 90 wt%, the polymer and the liquid crystal tend to be separated from each other to form two layers positioned one above the other, accompanied by a reduction in proportion of the interface to such an extent as to reduce the scattering property. The structure of the polymer dispersion liquid crystal layer varies with partial percentage of liquid crystal and, if it is not greater than 50 wt%, the liquid crystal exists in the form of droplets, but if it is not smaller than 50 wt%, polymer and liquid crystal mix up to form a continuous layer. The liquid crystal layer has a film thickness within the range of 5 to 25 μm, preferably within the range of 8 to 15 μm. If the film thickness thereof is smaller, the scattering characteristic will be so poor as to give an insufficient contrast, but if it is greater, a high voltage drive is required, making it difficult to accomplish a drive IC design.

As hereinabove described, the liquid crystal panel of the present invention is such that the amount of the reflected light before the incoming light reaches the liquid crystal layer is extremely small. Also, it suffices that the pixel electrodes employed in the prior art transmission-type are modified to provide the reflective electrodes and, therefore, the prior art array forming process can be employed with no modification needed therein.

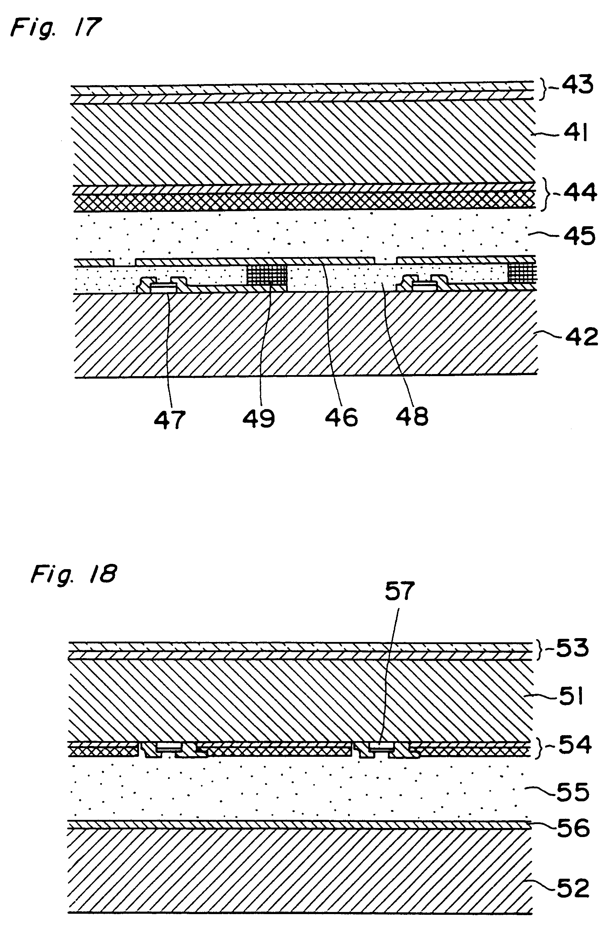

Further embodiments of the present invention will be described. It is to be noted that, to avoid a repetition of what has been described in connection with the foregoing embodiment or embodiments, only matter mainly different therefrom will be described. Fig. 17 illustrates a sectional view of the liquid crystal panel, and a glass substrate 41, an anti-reflection film 43 and a counterelectrode substrate including an anti-reflection film 44 are similar to those shown in Fig. 1. Reflective electrodes 46 are formed on thin-film transistors 47 through an insulating film 48. The reflective electrodes 46 and the thin-film transistors 47 are electrically connected with each other through connecting terminals 49. The insulating film 48 is made of either organic material such as polyimide or inorganic material such as $SiO_2$ or SiNx. The reflective electrodes 46 have their surface formed by a thin film of Al. Although Cr or the like may be employed, it has a problem in that the reflectance is lower than that of Al and the reflective electrodes tend to break due to its hardness.

Although each connecting terminal 49 has a recess of 0.5 to 1 μm, it does not pose any problem since polymer dispersion liquid crystal 45 does not require such a processing as orientation. The aperture will be 80% or higher in the case of the pixel of 100 x 100 μm in size and 70% or higher in the case of the pixel of 50 x 50 μm in size. However, surface indentations are formed on the thin-film transistors 47 and other and, therefore, the reflectance will be lowered somewhat.

Although source signal lines and gate signal lines are not shown, they are formed on an array substrate 42. Since a structure in which the reflective electrodes 46 overlay the signal lines and the thin-film transistors 47 is formed, no image noises will occur during an orientation operation of the liquid crystal above the signal lines and the thin-film transistors 47. Also, no light shielding film 8 such as shown in Fig. 1 is needed.

Fig. 18 illustrates an embodiment in which the structure of the anti-reflection film 4 of the counterelectrode substrate such as shown in Fig. 1 is employed to form the pixel electrodes. The structure of an anti-reflection film 54 of the pixel electrodes connected with drain terminals of thin-film transistors 57 is similar to the double layered structure of the anti-reflection film 4 shown in Fig. 1. However, in the case of Fig. 18, an array substrate 51 corresponds to the glass substrate 1 shown in Fig. 1. The drain terminals of the thin-film transistors 57 are electrically connected with the ITO thin film. A reflective film 56 made of Al is formed on the glass substrate 52.

The incoming light impinges from the array substrate 51 and are, after having passed through the pixel electrodes 54, reflected by the reflective electrodes 56 before it emerges outwardly from the array substrate 51. Other than the design wherein the pixel electrodes 54 are formed of an anti-reflection structure and the design wherein the counterelectrodes are rendered to be reflective electrodes 56, the structure has no considerable difference from the structure of the other embodiments. However, since no structural element exists on the side of the reflective electrodes 56, there is some advantages in that a highly satisfactory reflective surface can be formed and that the resistance can be reduced as compared with that formed of metal. It is to be noted that over the thin-film transistors 57 light shielding films such as shown in Fig. 1 may be formed if desired. Other points are similar to that in the embodiment of Fig. 1 and therefore they are not described for the sake of brevity.

Although any one of the anti-reflection film 44 shown in Fig. 17 and the anti-reflection film 54 shown in Fig. 18 has been described having the same structure as that of the anti-reflection film 4 shown in Fig. 1, it may be of the same structure as that of the anti-reflection film employed in any one of the embodiments of Figs. 5, 7, 10 and 13.

While as an effect of the anti-reflection film shown in the foregoing embodiment or embodiments the anti-reflection effect of light generated at the interface of the ITO thin film has been described, an anti-reflection effect for avoiding reflection of substance precipitated from the glass substrate can also be obtained. While the glass substrate is generally employed in the form of soda-lime glass, there may be a case in which ions and others precipitate into the liquid crystal, resulting in a reduction in retentivity of the liquid crystal. The dielectric thin film formed between the glass substrate and the ITO thin film has an effect of avoiding a precipitation of impurities into the liquid crystal.

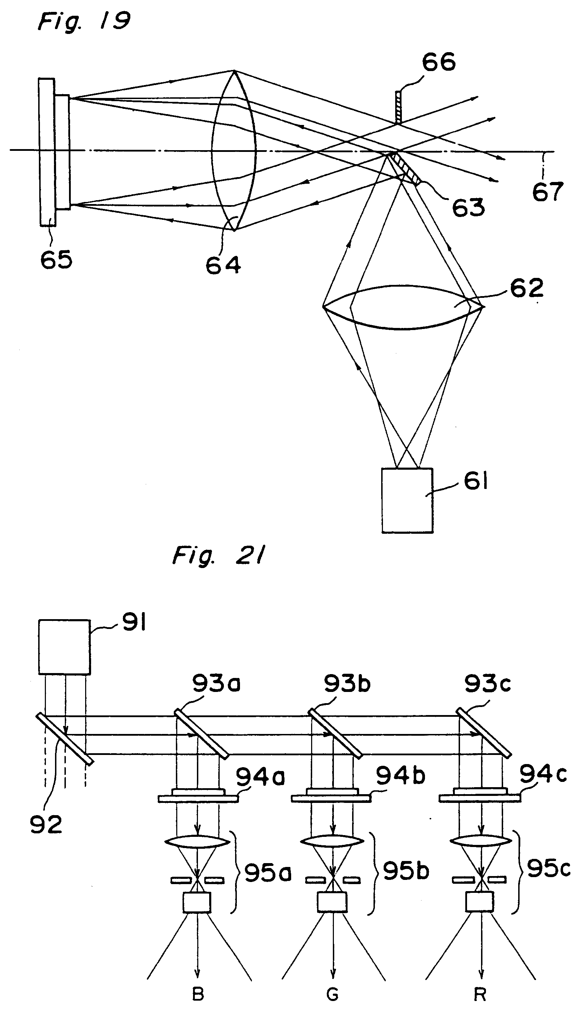

Hereinafter, the liquid crystal projection TV receiver set of the present invention will be described with reference to the drawings. Fig. 19 illustrates the structure of the liquid crystal projection TV receiver set. A liquid crystal panel 65 is employed in the form of the one shown in Fig. 1. It is, however, to be noted that the liquid crystal panel 65 may be employed in the form of any one of the liquid crystal panels described in connection with the various embodiments other than that of Fig. 1. A light source 61 is either a metal halide lamp or a xenon lamp. The lamp has an arc length which is preferably smaller so that the contrast of the displayed image can be increased. Where the metal halide lamp having an arc length of 5 mm is employed, the contrast will approximate to 100 at f-number of 5.0 to 6.0 although it varies with f-number of a projection lens assembly. On the other hand, if a lamp having an arc length of about 1 mm such as the xenon lamp is employed, the contrast of 200 or more can be attained However, the xenon lamp has a light conversion efficiency which is 1/2 to 1/3 of that of the metal halide lamp. In the liquid crystal projection TV receiver set of the present invention, the 250 watt metal halide lamp was employed. The arc length thereof is about 5 mm. Rays of light emitted from the light source 61 are, after having been condensed by a lens 62, impinged upon a mirror 63. A center line connecting between the center of the lens 64, the center of the liquid crystal panel 65 and one end of the mirror 63 is an optical axis 67. The lens 64 serves to telecentrically illuminate the liquid crystal panel 65 with rays of light reflected from the mirror 63 and, at the same time, is so positioned and so arranged as to project an optical image on the liquid crystal layer onto a screen to form an image.

The incoming light incident on the mirror 63 enters the lens 64, and the liquid crystal panel 65 modulates the incoming light according to a video signal applied. A portion of the modulated light is again passed through the lens 64. The pixels whose liquid crystal is in a completely transmitting state passes through an opening of an aperture 66, and light incident on the pixels in a scattering state is shielded. Light incident on the pixel in an intermediate state passes through an aperture according to the degree of modulation thereof and is then projected. While it may be projected in the form as presented, a magnifying lens is generally disposed at an exit of the aperture 66.

As hereinbefore discussed, the liquid crystal panel 65 has an anti-reflection film of a three-layered structure which is, where the incident light is white light, formed on a surface of the counterelectrode substrate. In the case of a color image display, it suffices to fit mosaic-shaped color filter to the liquid crystal panel. Also, where light from the light source 61 is separated into three wavelength regions of R, G and B light by a color separating optical system utilizing dichroic mirrors and others and the light incident on the liquid crystal panel 65 is a monochromatic light of the R, G and B light, an anti-reflection film of a double layered structure corresponding to the center wavelength of the light is formed. If light modulated by respective liquid crystal panels are projected through a color combining optical system or three projection lenses onto a screen so as to overlap with each other, a color image can be displayed. It is to be noted that the polymer dispersion liquid crystal panel has a poor scattering characteristic with respect to the R light. In view of this, in the liquid crystal projection TV receiver set of the present invention, the liquid crystal panel used to modulate the R light has a film thickness greater than the other and/or has an average particle size of the liquid crystal droplets that is greater than the other.

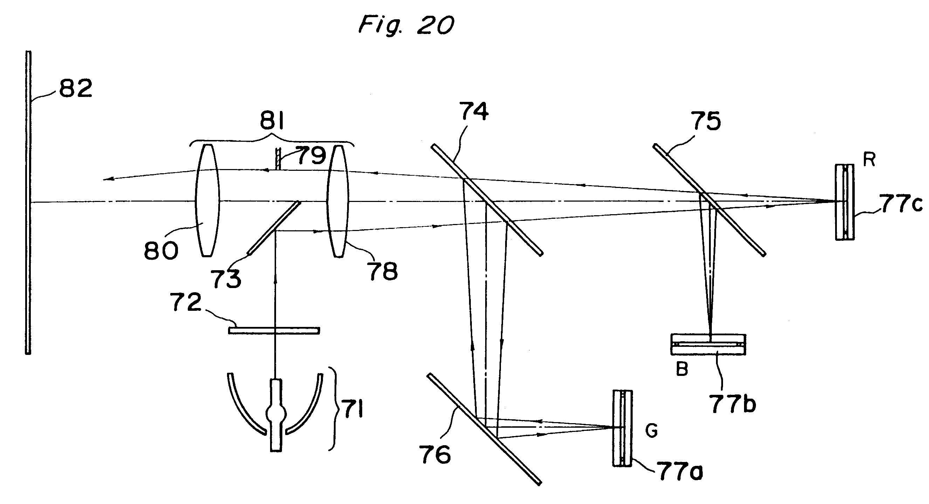

Hereinafter, the liquid crystal projection TV receiver set according to a different embodiment of the present invention will be described. Fig. 20 illustrates the structure of the liquid crystal projection TV receiver set according to the different embodiment of the present invention. It is, however, to be noted that structural elements which need not require an explanation are omitted. A light collecting optical system 71 employs a concave mirror and a xenon lamp which is a favorable point light source as means for generating light. It is to be noted that, if the xenon lamp has a power consumption of 250 to 1,000 watts, a practically satisfactory screen luminance can be obtained. As is the case with the embodiment of Fig. 19, a 250 watt metal halide lamp may be employed.

White rays of light emitted from the light collecting optical system 71 are, after having passed through a UV-IR cut-off filter 72 operable to reflect infrared and ultra-violet rays of light and to pass light of visible wavelength region therethrough, a mirror 73 and a lens 78, separated into G, B and R beams by a color separating optical system comprising a green reflecting dichroic mirror 74, a blue reflecting dichroic mirror 75 and a mirror 76. While each of liquid crystal panels 77a, 77b and 77c is in the form of the polymer dispersed liquid crystal of the structure shown in Fig. 1, any other liquid crystal panel than the polymer dispersed liquid crystal panel may be employed as is the case with the previous embodiment. The three beams so separated subsequently enters the polymer dispersion liquid crystal panels 77a, 77b and 77c. As shown in Figs. 3(a) and 3(b), the polymer dispersion liquid crystal panel controls a scattering and a transmission of the incident light according to a signal applied to the pixel electrode thereby to modulate the light. The modulated R, G and B beams are, after having been reflected by the polymer dispersion liquid crystal panels 77a, 77b and 77c, combined together by the green reflecting dichroic mirror 74, the blue reflecting dichroic mirror 75 and the mirror 76 and subsequently pass through the lens 78. Scattered light is shielded by the aperture 79 and, conversely, light within a predetermined angle passes through the apertures 79 and are then projected on an enlarged scale on the screen 82 through a lens 80.

The lens 78, the aperture 79 and the lens 80 form a projection optical system 81 operable to project an optical image, formed on the liquid crystal panels 77a, 77b and 77c, onto the screen 82 on an enlarged scale. It is to be noted that, if the contrast of 100 or greater is desired, the f-number of the projection lens need be 6.0 or greater. Even in such case, the angle of spread of the light incident on the liquid crystal panels requires the light of directionality corresponding to the f-number of 6.0.

The projection optical system 81 is operable to pass the light, which has been reflected by each liquid crystal panel 77a, 77b and 77c, and also to shield the scattered light. Consequently, a full color display at a high contrast an be realized on the screen 82. If the opening of the aperture 79 is reduced or the f-number of the projection lens is increased, the contrast can further be increased. However, the luminance of the image on the screen will be reduced.

In describing the liquid crystal panel and the liquid crystal projection TV receiver set according to the present invention, reference has been made to the reflection-type liquid crystal panel. However, the effect of the liquid crystal panel of the present invention is not always found in the reflection type, but may be found in the transmission type. By way of example, if the transmission type is employed, the reflected light generated in the prior art liquid crystal panel, specifically the light reflected by the interface between the air and the glass, that between the glass and ITO and that between the ITO and the liquid crystal, can be extremely reduced. In other words, the efficiency of utilization of light can be improved. Also, halation which has hitherto been occurred between the incident surface and the lens can be eliminated with the image quality consequently increased.

Fig. 21 illustrates the structure wherein the liquid crystal projection TV receiver set is constructed using the transmission type liquid crystal panels. A light source and light collecting optical system 91 is identical with that shown in Fig. 20. White rays of light emitted from the light collecting optical system 91 are, after having passed through a UV-IR cut-off filter 92 operable to pass infrared and ultra-violet rays of light and to reflect light of visible wavelength region there-through, separated into G, B and R beams by a color separating optical system comprising a blue reflecting dichroic mirror 93a, a green reflecting dichroic mirror 93b and a red reflecting dichroic mirror 93c. The three beams so separated subsequently enters liquid crystal panels 94a, 94b and 94c, respectively. The three color light modulated by the liquid crystal panels 94a, 94b and 94c, respectively are subsequently projected on an enlarged scale onto a screen (not shown) by projection lenses 95a, 95b and 95c.

The structure of the anti-reflection film employed in the liquid crystal panel of the present invention is not always adopted to the polymer dispersion liquid crystal panel and may be equally employed in all that employ ITO. In other words, even though the liquid crystal panel is of a type utilizing TN liquid crystal, STN liquid crystal or ferroelectric liquid crystal, the effect thereof can be appreciated. However, since any of those liquid crystal panels requires the formation of an orientation film, the refractive index of the orientation film must be so selected as to be equal to that of the liquid crystal.

Also, in any one of Figs. 19, 20 and 21, the projection lens system may not be always limited to that shown, and instead thereof, an optical system of a center shielded type wherein parallel light components are shielded by a shield and scattered light is projected onto a screen may be employed.

Also, in the liquid crystal projection TV receiver set shown in Fig. 21, although a single projection lens system is employed for each R, G or B light in a R, G and B light modulating system, it is not always limited thereto and arrangement may be made that, after display images modulated by the liquid crystal panels are combined together with the use of a color combining optical system, it is allowed to enter a projection lens system to project. Furthermore, the present invention is not limited to the use of the three liquid crystal panels for modulating the R, G and B light, respectively. By way of example, a television receiver set may be of a construction wherein mosaic-shaped color filters may be fitted to a single liquid crystal panel and images on the liquid crystal panel are then projected.

As hereinbefore described, the counterelectrode substrate of the liquid crystal panel of the present invention serves to considerably reduce the reflectance between ITO and the glass substrate and between the ITO and the liquid crystal by the provision of the multi-layered anti-reflection film, including the ITO thin film forming the counterelectrode, on the glass substrate. The formation of the anti-reflection film is easy and, in particular where the wavelength of the light incident on the liquid crystal panel used to modulate such as a liquid crystal projection TV receiver set is of a narrow bandwidth, a favorable result can be obtained. Also, the anti-reflection film is also formed on a surface which contacts air and it can easily be realized to render the overall reflectance to be 0.2% or lower.

An array structure takes a reflection electrode structure and, where the reflection electrode structure shown in Fig. 17 is employed, 70% or higher pixel aperture can be realized and no photoconductor phenomenon occur in the thin-film transistors. Yet, no image noise resulting from the signal lines and the orientation of the liquid crystal in the thin-film transistors is generated.

Important of all is that, since the use of the high polymer dispersion liquid crystal eliminates the need to use the polarizing plates making it possible to increase the efficiency of utilization of light to 80 to 85% as compared with about 25% exhibited by the TN liquid crystal panel, a high luminance display of 3 times or more can be realized. This does not always result in an increased efficiency of utilization of light, but also in a considerable reduction of the possibility of the light being converted into heat and, therefore, any possible deterioration of the panel resulting from heating can be eliminated. This is particularly advantageous in the case where, such as in the liquid crystal projection TV receiver set, the intensity of light incident on each liquid crystal panel is in the order of several ten thousand of luxes.

Since in the liquid crystal projection TV receiver set of the present invention makes use of the polymer dispersion liquid crystal panels of reflection type, a high luminance display can be realized and can support a large picture of 200 inches or greater. Also, depending on the peak wavelengths of the R, G and B light, the anti-reflection films are formed on the respective counterelectrode substrates of the liquid crystal panels and, depending on the liquid crystal panel for modulating the R light, the film thickness of the liquid crystal is increased and/or the particle size of the liquid crystal droplets is increased. Because of this, an image display favorable in white balance and contrast can be accomplished.

## Claims

1.   A liquid crystal panel which comprises

a first substrate (2; 42) having a plurality of pixel electrodes (6; 46) arranged in a matrix pattern and a plurality of switching elements (7; 47) connected with the pixel electrodes formed thereon;
a second substrate (1; 41) having a counter electrode (4b; 31b; 32b; 33b; 34b) formed thereon and at least one dielectric thin film layer (4a; 31a, 31c; 32a, 32c; 33a, 33c; 34a, 34c) arranged between said substrate (1; 41) and said counter electrode (4b; 31b; 32b; 33b; 34b); and
a polymer dispersed liquid crystal layer (5; 45) sandwiched between the first and second substrates;
said counter electrode (4b; 31b; 32b; 33b; 34b) being a transparent electroconductive thin film having an optical thickness of about $\lambda/2$, wherein $\lambda$ is the design wavelength of the panel; and
said dielectric thin film layer (4a; 31a, 31c; 32a, 32c; 33a, 33c; 34a, 34c) having an index of refraction smaller than that of said counter electrode and greater than the index of refraction of said polymer dispersed liquid crystal layer in the transmitting state.

2.   A liquid crystal panel which comprises

a first substrate (52) having a counter electrode (56) formed thereon;
a second substrate (51) having a plurality of pixel electrodes arranged in a matrix pattern and a plurality of switching elements (57) connected with the pixel electrodes formed thereon; a dielectric thin film layer arranged between said substrate (51) and said pixel electrodes; and
a polymer dispersed liquid crystal layer (55) sandwiched between the first and second substrates;
said pixel electrodes (56) being in thin film form having an optical thickness of about $\lambda/2$ wherein $\lambda$ is the design wavelength of the panel; and
said dielectric thin film layer having an index of refraction smaller than that of said pixel electrodes and greater than that of said dispersed liquid crystal layer in the transmitting state.

3. The liquid crystal panel of claim 1 or 2, wherein said at least one dielectric layer (4a; 31a, 31c; 32a, 32c; 33a, 33c; 34a, 34c) is a dielectric thin layer having a thickness of about $\lambda$ N/4, wherein N is an odd integer $\geq$ 1.

4. The liquid crystal panel of any one of claims 1 to 3, wherein said electrodes on said first substrate (2; 42; 52) are reflecting electrodes (6; 46; 56).

5. The liquid crystal panel of claim 4, wherein said switching elements are thin-film transistors (7; 47) which are covered by an insulating layer (9; 48) and a reflective film (8; 46) of metallic material.

6. The liquid crystal panel of claims 1 and 5, wherein the first substrate (42) is provided with an insulating layer (48), the reflecting pixel electrodes (46) are formed on the insulating layer (48) and the thin-film transistors (47) are formed beneath, and are connected to, the reflecting pixel electrodes (46).

7. The liquid crystal panel of any preceding claim, wherein said polymer dispersed liquid crystal layer has a refraction index $n_0$ of ordinary light within the range of 1.50 to 1.53.

8. The liquid crystal panel of claim 7, wherein the liquid crystal layer has a film thickness within the range of 5 to 25 μm.

9. The liquid crystal panel of claim 7, wherein said polymer dispersed liquid crystal consists of a resin component, which is a light-curable acrylic resin, and a nematic liquid crystal component.

10. The liquid crystal panel of claim 9, wherein the amount of said liquid crystal component is within the range of 50 to 85 wt% relative to the polymer dispersed liquid crystal.

11. The liquid crystal panel of any one of claims 7 to 10, wherein said at least one dielectric layer is one dielectric thin film layer made of a material selected from the group consisting of $Al_2O_3$, $Y_2O_3$ and SiO, and has a refraction index of 1.60 to 1.80.

12. The liquid crystal panel of any one of claims 7 to 11, characterized by two dielectric thin film layers (31a, 31c), with said counter electrode layer (31b) inbetween, and made of a material selected from the group consisting of $Al_2O_3$, $Y_2O_3$ and SiO, and having a refraction index of 1.60 to 1.80.

13. The liquid crystal panel of any one of claims 7 to 12, wherein said dielectric layer is of a multi-layered structure (32c; 33a; 34a, 34c) including a first dielectric thin-film with a refractive index of 1.3 to 1.7, made of material selected from the group consisting of $MgF_2$, $SiO_2$, $Al_2O_3$, $CeF_3$ and SiO, and a second dielectric thin-film with a refractive index of 1.7 to 2.3, made of material selected from the group consisting of $Y_2O_3$, $ZrO_2$, $HfO_2$, $Ta_2O_5$, $CeO_2$, $TiO_2$ and ZnS.

14. The liquid crystal panel of any one of claims 7 to 13, characterized by a mosaic color filter.

15. A projection-type display device comprising at least one liquid crystal panel according to any one of claims 4 to 14 in the form of a reflective-type liquid crystal panel (65; 77a, 77b, 77c), a light emitting means (61; 71), and a projecting means for projecting rays of light which have been modulated by said at least one liquid crystal panel.

16. A projection-type display device comprising at least one liquid crystal panel according to claim 1 or 2 in the form of a transmissive-type liquid crystal panel (94a, 94b, 94c), a light emitting means (11), and a projecting means for projecting rays of light which have been modulated by the liquid crystal panel.

17. The projection-type display device of claim 15 or 16, wherein said projecting means has an F-number not smaller than 6.

**Patentansprüche**

1. Flüssigkristall-Anzeigevorrichtung mit

**18**

einem ersten Substrat (2; 42), das eine Vielzahl von Pixelelektroden (6; 46), die in einem Matrixmuster angeordnet sind, und eine Vielzahl von Schaltelementen (7; 47) aufweist, die mit den Pixelelektroden verbunden sind;

einem zweiten Substrat (1; 41), das eine darauf angeordnete Gegenelektrode (4b; 31b; 32b; 33b; 34b) und zumindest eine dielektrische Dünnschicht (4a; 31a, 31c; 32a, 32c; 33a, 33c; 34a, 34c) aufweist, die zwischen dem Substrat (1; 41) und der Gegenelektrode (4b; 31b; 32b; 33b; 34b) angeordnet ist; und

einer polymerdispergierten Flüssigkristallschicht (5; 45), die sandwichartig zwischen dem ersten und dem zweiten Substrat angeordnet ist; wobei

die Gegenelektrode (4b; 31b; 32b; 33b; 34b;) eine transparente, elektrischleitfähige dünne Schicht mit einer optischen Dicke von etwa $\lambda/2$ ist, wobei $\lambda$ die Bemessungswellenlänge der Anzeigevorrichtung darstellt; und die dielektrische Dünnschicht (4a; 31a, 31c; 32a, 32c; 33a, 33c; 34a, 34c) einen Brechungsindex aufweist, der kleiner als der Brechungsindex der Gegenelektrode und größer als der Brechungsindex der polymerdispergierten Flüssigkristallschicht im transmittierenden Zustand ist.

2. Flüssigkristall-Anzeigevorrichtung mit

einem ersten Substrat (52), das eine darauf angeordnete Gegenelektrode (56) aufweist;
einem zweiten Substrat (51), das eine Vielzahl von Pixelelektroden, die in einem Matrixmuster angeordnet sind und eine Vielzahl von Schaltelementen (57) aufweist, die mit den Pixelelektroden verbunden sind;
einer dielektrischen Dünnschicht, die zwischen dem Substrat (51) und den Pixelelektroden angeordnet ist; und einer polymerdispergierten Flüssigkristallschicht (55), die sandwichartig zwischen dem ersten und dem zweiten Substrat angeordnet ist;
wobei die Pixelelektroden (56) in Form einer dünnen Schicht vorliegen, die eine optische Dicke von etwa $\lambda/2$ aufweist, wobei $\lambda$ die Bemessungswellenlänge der Anzeigevorrichtung ist; und
die dielektrische Dünnschicht einen Brechungsindex aufweist, der kleiner als der Brechungsindex der Pixelelektroden und größer als der Brechungsindex der dispergierten Flüssigkristallschicht im transmittierenden Zustand ist.

3. Flüssigkristall-Anzeigevorrichtung nach Anspruch 1 oder 2,
wobei die zumindest eine dielektrische Schicht (4a; 31a, 31c; 32a, 32c; 33a, 33c; 34a, 34c) eine dielektrische Dünnschicht ist, deren Dicke etwa $\lambda$ N/4 beträgt, wobei N eine ungerade ganze Zahl $\geq$ 1 ist.

4. Flüssigkristall-Anzeigevorrichtung nach einem der Ansprüche 1 bis 3,
wobei die Elektroden auf dem ersten Substrat (2; 42; 52) reflektierende Elektroden (6; 46; 56) sind.

5. Flüssigkristall-Anzeigevorrichtung nach Anspruch 4,
wobei die Schaltelemente Dünnfilmtransistoren (7; 47) sind, die mit einer Isolierschicht (9; 48) und einer reflektierenden Schicht (8; 46) aus metallischem Material überzogen sind.

6. Flüssigkristall-Anzeigevorrichtung nach Anspruch 1 und 5,
wobei das erste Substrat (42) mit einer Isolierschicht (48) versehen ist, die reflektierenden Pixelelektroden (46) auf der Isolierschicht (48) und die Dünnfilmtransistoren (47) darunter angeordnet und mit den reflektierenden Pixelelektroden (46) verbunden sind.

7. Flüssigkristall-Anzeigevorrichtung nach einem der vorhergehenden Ansprüche,
wobei die polymerdispergierte Flüssigkristallschicht für den ordentlichen Lichtstrahl einen Brechungsindex $n_0$ im Bereich von 1,50 bis 1,53 aufweist.

8. Flüssigkristall-Anzeigevorrichtung nach Anspruch 7,
wobei die Flüssigkristallschicht eine Schichtdicke im Bereich von 5 $\mu$m bis 25 $\mu$m aufweist.

9. Flüssigkristall-Anzeigevorrichtung nach Anspruch 7,
wobei der polymerdispergierte Flüssigkristall aus einer Harzkomponente, die ein lichtaushärtbares Acrylharz ist, und aus einer nematischen Flüssigkristallkomponente besteht.

10. Flüssigkristall-Anzeigevorrichtung nach Anspruch 9,
wobei die Menge der Flüssigkristallkomponente im Bereich von 50 bis 85 Masseprozent, bezogen auf den polymerdispergierten Flüssigkristall, beträgt.

**11.** Flüssigkristall-Anzeigevorrichtung nach einem der Ansprüche 7 bis 10,
wobei die zumindest eine dielektrische Schicht aus einer dielektrischen Dünnschicht besteht, die aus einem Material hergestellt wurde, das aus der Gruppe $Al_2O_3$, $Y_2O_3$ und SiO ausgewählt wurde und das einen Brechungsindex von 1,60 bis 1,80 aufweist.

**12.** Flüssigkristall-Anzeigevorrichtung nach einem der Ansprüche 7 bis 11,
dadurch gekennzeichnet, dass sie zwei dielektrische Dünnschichten (31a, 31c) aufweist, zwischen denen die Gegenelektrode (31b) angeordnet ist und dass sie aus einem Material hergestellt wurde, das aus der Gruppe $Al_2O_3$, $Y_2O_3$ und SiO ausgewählt wurde und das einen Brechungsindex von 1,60 bis 1,80 aufweist.

**13.** Flüssigkristall-Anzeigevorrichtung nach einem der Ansprüche 7 bis 12,
wobei die dielektrische Schicht aus einer mehrlagigen Struktur (32c; 33a; 34a, 34c) besteht, die eine erste dielektrische Dünnschicht mit einem Brechungsindex von 1,3 bis 1,7 enthält, die aus einem Material hergestellt wurde, das aus der Gruppe $MgF_2$, $SiO_2$, $Al_2O_3$, $CeF_3$ und SiO ausgewählt wurde und die eine zweite dielektrische Dünnschicht mit einem Brechungsindex von 1,7 bis 2,3 enthält, die aus einem Material hergestellt wurde, das aus der Gruppe $Y_2O_3$, $ZrO_2$, $HfO_2$, $Ta_2O_5$, $CeO_2$, $TiO_2$ und ZnS ausgewählt wurde.

**14.** Flüssigkristall-Anzeigevorrichtung nach einem der Ansprüche 7 bis 13,
dadurch gekennzeichnet, dass sie ein Mosaik-Farbfilter aufweist.

**15.** Projektions-Anzeigevorrichtung,
die zumindest eine Flüssigkristall-Anzeigevorrichtung nach einem der Ansprüche 4 bis 14 in Form einer Flüssigkristall-Anzeigevorrichtung vom Reflexionstyp (65; 77a, 77b, 77c), eine lichtemittierende Einrichtung (61; 71) und eine Projektionseinrichtung zur Projektion von Lichtstrahlen umfasst, die mittels der zumindest einen Flüssigkristall-Anzeigevorrichtung moduliert wurden.

**16.** Projektions-Anzeigevorrichtung,
die zumindest eine Flüssigkristall-Anzeigevorrichtung nach Anspruch 1 oder 2 in Form einer Flüssigkristall-Anzeigevorrichtung vom Transmissionstyp (94a, 94b, 94c), eine lichtemittierende Einrichtung (11) und eine Projektionseinrichtung zur Projektion von Lichtstrahlen umfasst, die mittels der Flüssigkristall-Anzeigevorrichtung moduliert wurden.

**17.** Projektions-Anzeigevorrichtung nach Anspruch 15 oder 16,
wobei die Projektionseinrichtung eine Blendenzahl aufweist, die nicht kleiner als 6 ist.

**Revendications**

**1.** Panneau à cristaux liquides qui comprend

un premier substrat (2 ; 42) comportant une pluralité d'électrodes de pixels (6 ; 46) agencées suivant une disposition en matrice et une pluralité d'éléments de commutation (7 ; 47) reliés aux électrodes de pixels formées sur celui-ci,
un second substrat (1 ; 41) comportant une contre-électrode (4b ; 31b ; 32b ; 33b ; 34b) formée sur celui-ci et au moins une couche de film mince de diélectrique (4a ; 31a, 31c ; 32a, 32c ; 33a, 33c ; 34a, 34c) disposée entre ledit substrat (1 ; 41) et ladite contre-électrode (4b ; 31b ; 32b ; 33b ; 34b), et
une couche de cristaux liquides dispersés dans un polymère (5 ; 45) insérée entre les premier et second substrats,
ladite contre-électrode (4b ; 31b ; 32b ; 33b ; 34b) étant un film mince électroconducteur transparent présentant une épaisseur optique d'environ $\lambda/2$, où $\lambda$ est la longueur d'onde de conception du panneau, et
ladite couche de film mince de diélectrique (4a ; 31a, 31c ; 32a, 32c ; 33a, 33c ; 34a, 34c) présentant un indice de réfraction inférieur à celui de ladite contre-électrode et supérieur à l'indice de réfraction de ladite couche de cristaux liquides dispersés dans un polymère dans l'état de transmission.

**2.** Panneau à cristaux liquides qui comprend

un premier substrat (52) comportant une contre-électrode (56) formée sur celui-ci,
un second substrat (51) comportant une pluralité d'électrodes de pixels agencées suivant une disposition en matrice et une pluralité d'éléments de commutation (57) reliés aux électrodes de pixels formées sur celui-ci, une couche de film mince de diélectrique disposée entre ledit substrat (51) et lesdites électrodes de pixels, et

une couche de cristaux liquides dispersés dans un polymère (55) insérée entre les premier et second substrats,

lesdites électrodes de pixels (56) étant d'une forme en film mince présentant une épaisseur optique d'environ $\lambda/2$ où $\lambda$ est la longueur d'onde de conception du panneau, et

ladite couche de film mince de diélectrique présentant un indice de réfraction inférieur à celui desdites électrodes de pixels et supérieur à celui de ladite couche de cristaux liquides dispersés dans l'état de transmission.

3. Panneau à cristaux liquides selon la revendication 1 ou 2, dans lequel ladite au moins une couche de diélectrique (4a ; 31a, 31c ; 32a, 32c ; 33a, 33c ; 34a, 34c) est une couche mince de diélectrique présentant une épaisseur d'environ $\lambda$ N/4, où N est un nombre entier impair $\geq 1$.

4. Panneau à cristaux liquides selon l'une quelconque des revendications 1 à 3, dans lequel lesdites électrodes sur ledit premier substrat (2 ; 42 ; 52) sont des électrodes réfléchissantes (6 ; 46 ; 56).

5. Panneau à cristaux liquides selon la revendication 4, dans lequel lesdits éléments de commutation sont des transistors à couches minces (7 ; 47) qui sont recouverts par une couche isolante (9 ; 48) et un film réfléchissant (8 ; 46) d'un matériau métallique.

6. Panneau à cristaux liquides selon les revendications 1 et 5, dans lequel le premier substrat (42) est muni d'une couche isolante (48), les électrodes de pixels réfléchissantes (46) sont formées sur la couche isolante (48) et les transistors à couches minces (47) sont formés au-dessous, et sont reliés aux électrodes de pixels réfléchissantes (46).

7. Panneau à cristaux liquides selon l'une quelconque des revendications précédentes, dans lequel ladite couche de cristaux liquides dispersés dans un polymère présente un indice de réfraction $n_o$ de lumière ordinaire à l'intérieur de la plage de 1,50 à 1,53.

8. Panneau à cristaux liquides selon la revendication 7, dans lequel la couche de cristaux liquides présente une épaisseur de film à l'intérieur de la plage de 5 à 25 $\mu$m.

9. Panneau à cristaux liquides selon la revendication 7, dans lequel lesdits cristaux liquides dispersés dans un polymère sont constitués d'un composant de résine, qui est une résine acrylique polymérisable à la lumière, et d'un composant de cristaux liquides nématiques.

10. Panneau à cristaux liquides selon la revendication 9, dans lequel la quantité dudit composant de cristaux liquides est à l'intérieur de la plage de 50 à 85 % en poids relativement aux cristaux liquides dispersés dans un polymère.

11. Panneau à cristaux liquides selon l'une quelconque des revendications 7 à 10, dans lequel ladite au moins une couche de diélectrique est une couche de film mince de diélectrique faite d'un matériau choisi parmi le groupe constitué de $Al_2O_3$, $Y_2O_3$ et SiO, et présente un indice de réfraction de 1,60 à 1,80.

12. Panneau à cristaux liquides selon l'une quelconque des revendications 7 à 11, caractérisé par deux couches de film mince de diélectrique (31a, 31c), ladite couche de contre-électrode (31b) étant située entre les deux, et faite d'un matériau choisi parmi le groupe constitué de $Al_2O_3$, $Y_2O_3$ et SiO, et présentant un indice de réfraction de 1,60 à 1,80.

13. Panneau à cristaux liquides selon l'une quelconque des revendications 7 à 12, dans lequel ladite couche de diélectrique est d'une structure multicouche (32c ; 33a ; 34a, 34c) comprenant un premier film mince de diélectrique présentant un indice de réfraction de 1,3 à 1,7, fait d'un matériau choisi parmi le groupe constitué de $MgF_2$, $SiO_2$, $Al_2O_3$, $CeF_3$ et SiO, et un second film mince de diélectrique présentant un indice de réfraction de 1,7 à 2,3, fait d'un matériau choisi parmi le groupe constitué de $Y_2O_3$, $ZrO_2$, $HfO_2$, $Ta_2O_5$, $CeO_2$, $TiO_2$ et ZnS.

14. Panneau à cristaux liquides selon l'une quelconque des revendications 7 à 13, caractérisé par un filtre de couleur en mosaïque.

15. Dispositif d'affichage de type à projection comprenant au moins un panneau à cristaux liquides conforme à l'une quelconque des revendications 4 à 14 sous forme d'un panneau à cristaux liquides de type réfléchissant (65 ; 77a, 77b, 77c), un moyen d'émission de lumière (61 ; 71), et un moyen de projection destiné à projeter des rayons de lumière qui ont été modulés par ledit au moins un panneau à cristaux liquides.

16. Dispositif d'affichage de type à projection comprenant au moins un panneau à cristaux liquides conforme à la revendication 1 ou 2 sous forme d'un panneau à cristaux liquides de type transmissif (94a, 94b, 94c), un moyen d'émission de lumière (11), et un moyen de projection destiné à projeter des rayons de lumière qui ont été modulés par le panneau à cristaux liquides.

17. Dispositif d'affichage de type à projection selon la revendication 15 ou 16, dans lequel ledit moyen de projection présente une valeur de diaphragme qui n'est pas inférieure à 6.

*Fig. 1*

*Fig. 2*

*Fig. 3(a)*

*Fig. 3(b)*

LIGHT

LIGHT

26

23

24

25

24

24

21

22

(a) OFF

26

23

24

24

25

24

21

22

.(b) ON

*Fig. 4*

Fig. 5

Fig. 6

Fig. 7

Fig. 8

*Fig. 9*

WAVELENGTH (mm)

*Fig. 10*

Fig. 11

Fig. 12

Fig. 13

Fig. 14

REFLECTANCE (%)

WAVELENGTH (n m)

## Fig. 15

## Fig. 16

Fig. 17

Fig. 18

Fig. 19

Fig. 21

Fig. 20

EP 0 569 922 B1

Fig. 22    PRIOR ART

101

103
108
107a
106
107b

102    105    104

EP 0 569 922 B1

Fig. 23    PRIOR ART

EP 0 569 922 B1